# EUROPÄISCHE PATENTANMELDUNG

(11) **EP 1 997 787 A2**
(43) Veröffentlichungstag der Anmeldung: **03.12.2008**
(21) Anmeldenummer: 08156436.1
(22) Anmeldetag: 19.05.2008
(51) Int. Cl.: C04B 26/26, C04B 28/02, C04B 40/00

(54) **Pigmentzubereitungen von pastöser oder gelförmiger Konsistenz**

(30) Priorität: 23.05.2007 DE 102007023912
(71) Anmelder: LANXESS Deutschland GmbH, 51369 Leverkusen (DE)
(72) Erfinder: Friedrich, Holger, 47798, Krefeld (DE); Kischkewitz, Jürgen, 40883, Ratingen (DE)

(57) **Zusammenfassung**

Die vorliegende Erfindung betrifft pastöse oder gelförmige Pigmentzubereitungen zum Einfärben von kalk- und/oder zementgebundenen Baustoffen, Asphalt, Farben, Lacken, Papier oder Kunststoffen sowie ein Verfahren zu deren Herstellung.

## Beschreibung

Die vorliegende Erfindung betrifft pastöse oder gelförmige Pigmentzubereitungen zum Einfärben von kalk- und/oder zementgebundenen Baustoffen, Asphalt, Farben, Lacken, Papier oder Kunststoffen sowie ein Verfahren zu deren Herstellung.

Die zunehmende farbige Gestaltung unserer Umwelt in den letzten Jahrzehnten hat den Einsatz von Pigmenten stark ansteigen lassen. Da viele eingefärbte Materialien zumindest anteilig anorganische Pigmente enthalten, ist auch deren Bedarf stetig gestiegen. Anorganische Pigmente sind heute in vielen Bereichen des täglichen Lebens anzutreffen. Sie werden beispielsweise zum Einfärben von Baustoffen wie Beton und Asphalt, Dispersionsfarben, Lacken, Papier und Kunststoffen eingesetzt. Eisenoxidpigmente als die heutzutage mengenmäßig größte Gruppe der anorganischen Buntpigmente werden bereits seit prähistorischer Zeit eingesetzt. Die ca. 15.000 Jahre alten Höhenmalereien in Altamira (Spanien) und Lascaux (Frankreich) belegen die Verwendung von natürlich vorkommendem Eisenoxid als Pigment. Auch die alten Ägypter, Griechen und Römer nutzten natürlich vorkommende Eisenoxidpigmente als Färbemittel. Die natürlichen Vorkommen können diesen Bedarf seit langen nicht mehr decken, zumal auch die qualitativen Anforderungen hinsichtlich der anwendungstechnischen Eigenschaften ständig zugenommen haben und weiter zunehmen. Die synthetisch hergestellten Pigmente sind den natürlich vorkommenden hinsichtlich Deckkraft, Farbbrillanz und Qualitätskonstanz deutlich überlegen.

Die Verarbeitung von Pigmenten verlangt zur Erzielung eines optimalen Farbeindrucks ein Aufmahlen der Pigmente zu Primärteilchen. Daher umfassen die modernen Produktionsprozesse für Pigmente meist einen solchen Mahlprozess. Die dadurch entstehenden Pulver stauben allerdings aufgrund ihrer Feinteiligkeit sehr stark und neigen zu Adhäsion an Verpackungen und Maschinenteilen sowie bei der Lagerung in Silos. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen wie zum Beispiel Eisenoxidpigmenten ist eine Vermeidung von Staubbelästigung zunehmend vom Markt gewünscht.

### Lieferformen zum Einfärben von Baustoffen:

Zum Einfärben von Baustoffen, wie beipsielsweise Betonwaren, werden die Pigmente größtenteils in pulverförmigem Zustand eingesetzt. Sie haben in gemahlener Form den Vorteil der guten Dispergierbarkeit. Die vollständige und homogene Verteilung solcher Pigmentpulver erfolgt im Betonmischer in einer kurzen Zeit - in der Regel innerhalb weniger Minuten. Der Nachteil dieser feinen Pulver besteht darin, dass sie kein gutes Fließverhalten aufweisen und sich beim Lagern häufig zusammenballen und verklumpen. Die genaue Dosierung bei der Verarbeitung wird hierdurch erschwert. Ein weiterer Nachteil der Pulver besteht darin, dass sie zum Stauben neigen.

Die Staubvermeidung und verbesserte Dosierung bei der Anwendung von Pigmenten zur Einfärbung von Baustoffen ist ein vorrangiges Ziel. Seit Ende der 1980er-Jahre wird dieses Ziel mehr oder weniger durch Anwendung von Granulationsverfahren auf Pigmente erreicht. Solche Granulationsverfahren sind beispielsweise Aufbau- oder Sprühtrocknungs-Granulation.

Die Sprühtrocknungs-Granulation geht von Pigmentsuspensionen aus, denen Granulat-Bindemittel zugesetzt werden. Die Granulation nach dem Sprühtrocknungs-Verfahren erfolgt im Gleich- oder Gegenstrom über Ein- oder Zweistoffdüsen beziehungsweise über Zerstäubungstrockner, wobei Granulate mit einer mittleren Teilchengröße von 50 bis 500 µm erzeugt werden. Die entsprechenden Verfahren sind in zahlreichen Schutzrechten beschrieben und dem Fachmann bekannt. Bei diesen Verfahren werden überwiegend wasserlösliche Bindemittel verwendet. So wird in DE 3 619 363 A1, EP 0 268 645 A1 und EP 0 365 046 A1 von organischen Substanzen wie zum Beispiel Ligninsulfonaten, Formaldehydkondensaten, Gluconsäuren, sulfatierten Polyglykolethern ausgegangen, während gemäß der Lehre von DE 3 918 694 A1 und US 5,215,583 A1 auch anorganische Salze wie zum Beispiel Silikat und Phosphat eingesetzt werden können. In jüngster Zeit sind auch Granulate mit wasserunlöslichen Bindemitteln vorgeschlagen worden. So werden in der US 6,596,072 B1 und US 6,695,990 B1 hydrophiler Ton, vorzugsweise Alumosilikate oder Puzzolane, als Bindemittel zugesetzt. Die DE 103 19 483 A1 offenbart ein dispergierbares Pigmentkonzentrat, unter anderem zum Einfärben von Baustoffen wie Beton, das wenigstens ein Pigment sowie gegebenenfalls Binde-, Dispergier- und Netzmittel enthält, mit einem Gehalt an einem Zerfalls-Hilfsmittel, das beim Kontakt mit Wasser (in ausreichender Menge) innerhalb von einer Minute ohne mechanische Einwirkung den im wesentlichen vollständigen Zerfall der Primärstruktur des Konzentrats unter Freisetzung des Pigments bewirkt. Als Zerfalls-Hilfsmittel werden vorzugsweise Cellulosefasern mit einer Teilchengröße zwischen 10 und 2000 µm eingesetzt. Die DE 197 31 698 A1 offenbart bereits die Verwendung von Sprengmitteln bei der Herstellung von Granulaten, die zum Einfärben von Baustoffen oder Asphalt geeignet sein sollen. Bei einem Sprengmittel handelt es sich meist um stark hydrophile Polymere mit einem entsprechend großen Absorptionsvermögen für Wasser. Auch in der DE 100 02 559 B4 und in der DE 100 66 190 B4 wird bereits der Einsatz von Sprengmitteln bei der Granulatherstellung offenbart.

Die Sprühgranulation erfordert wegen der Tropfenbildung die Verwendung von gut fließfähigen, also dünnflüssigen Suspensionen. Da für den Trocknungsvorgang eine größere Menge an Wasser zu verdampfen ist, ist das Verfahren sehr energieaufwändig und daher aus Umwelt- und Klimaschutzgründen ungünstig. Bei Pigmenten, die über einen trockenen Herstellungsprozess, beispielsweise einen Glühprozess, hergestellt wurden, bedeutet die Sprühgranulation einen zusätzlichen Verfahrensschritt mit hohen Energiekosten, da das bereits in trockenem Zustand anfallende Pigment wieder in Wasser aufgeschlämmt und getrocknet werden muss. Außerdem fällt bei der Sprühgranulation ein mehr oder weniger großer Anteil an Feinmaterial im Staubfilter an, der wieder in die Produktion zurückgeführt werden muss.

Die Aufbaugranulation kann - ausgehend von Pigmentpulver - in Mischern unter hoher Turbulenz, im Wirbelschichtverfahren oder auch in Drehtellern (Pelletiertellern) oder Drehtrommeln (Pelletiertrommeln) durchgeführt werden. Allen diesen Verfahren ist gemeinsam, dass der Bindemittelbedarf, meistens Wasser, groß ist, so dass als zusätzlicher Verfahrensschritt eine Trocknung nachfolgen muss. Auch werden hierbei Granulate unterschiedlicher Größe erhalten, insbesondere, wenn nicht ausreichend Bindemittel für die Pulvermenge zur Verfügung steht oder die aktuelle Verteilung nicht optimal ist. Dann kann ein gewisser Anteil der Granulatteilchen zu groß werden, während andererseits auch noch zu kleine und damit noch staubende Anteile vorliegen. Deshalb ist eine Klassierung der entstehenden Granulate mit einem Rücklauf von Über- und Unterkorn erforderlich. Die Granulation in einem Drehteller (Pelletierteller) führt zu einem breiten Teilchengrößenspektrum. Wo dies wegen der schlechten Dispergierbarkeit zu großer Teilchen nicht erwünscht ist, muss durch intensive personelle Überwachung der Granuliervorgang verfolgt werden und durch manuelle Steuerung der Keimmenge die Granulatherstellung optimiert werden. Üblicherweise erfolgt auch hierbei eine Klassierung mit Rückführung des Über- und Unterkorns.

Neben der Aufbau- und Sprühtrocknungs-Granulation sind im Stand der Technik auch andere Granulationsverfahren beschrieben. So wird beispielsweise in der EP 0 507 046 A1 eine Kombination von Sprüh- und Aufbaugranulation offenbart. In der DE 3 619 363 A1 und EP 0 268 645 A1 ist die Anwendung eines Kompaktierverfahrens ausgenommen.

In den letzten Jahren haben sich auch zunehmend Brikettier- und Pressgranulate zum Einfärben von Baustoffen auf dem Markt durchsetzen können. In der DE 196 38 042 A1 und der DE 196 49 756 A1 werden anorganische Pigmentgranulate aus Trockenpigmenten, zum Beispiel Fertiggut, durch Abmischung mit einem oder mehreren Hilfsmitteln, Kompaktierung und weiteren Folgeschritten wie Zerkleinern, Sieben und Rückführen von Grob- und/oder Feingut beschrieben. Die erhaltenen Granulate können mit einer zusätzlichen Schicht umhüllt werden, die zur Erhöhung der Stabilität beziehungsweise als Hilfe bei der Verarbeitung dient. Diese Granulate haben zwischenzeitlich großen kommerziellen Erfolg bei der Einfärbung von Baustoffen. Nachteilig bei diesem Verfahren ist, dass von trockenen und gegebenenfalls gemahlenen Pigmentpulvern ausgegangen wird. Es ist also auch wieder ein energieaufwändiger Produktionsschritt erforderlich, der aus Umwelt- und Klimaschutzgründen ungünstig ist.

In der DE 4 336 613 A1 werden anorganische Pigmentgranulate aus Trockenpigmenten, zum Beispiel Fertiggut, durch Abmischung mit Bindemitteln, Kompaktierung und weiteren Folgeschritten wie Schrotung auf einem Siebgranulator und einer anschließenden Aufbaugranulation auf einem Drehteller oder in einer Drehtrommel beschrieben. Die auf diese Weise hergestellten Pigmentgranulate sind zum Einfärben von Baustoffen wie Beton oder Asphalt geeignet. Der bereits oben bei den Press- und Brikettiergranulaten erwähnte Nachteil trifft auch in diesem Fall zu.

Dem Fachmann sind noch weitere Verfahren zur Herstellung von anorganischen Pigmentgranulaten bekannt, die unter anderem zum Einfärben von Baustoffen geeignet sind. In DE 28 44 710 A1 wird die Granulation von Pigmenten im Fließbett mit Granulierhilfsmitteln beschrieben, wobei trockenes Pigmentpulver mit Wasser besprüht wird. Die US 6,758,893 B2 offenbart ein Extrusionsverfahren, bei dem die Pigmente mit 1 bis 25 Gew.-% Wasser vermischt werden, um ein feuchtes Pulver zu erhalten. Das feuchte Pulver wird durch eine Matrize mit mindestens einer Öffnung extrudiert. Die erhaltenen Granulate werden auf einen Restfeuchte-Gehalt von weniger als 1 Gew.-% getrocknet, zerkleinert und abgesiebt. Die nach diesem Extrusionsverfahren hergestellten Extrusionsgranulate sind zum Einfärben von Beton geeignet. Die US 6,562,120 B1 beschreibt ein sehr ähnliches Verfahren. Dabei handelt es sich um eine Mischung aus einem Extrusions- und Kompaktierverfahren. Eine feuchte Mischung aus Pigment und Wasser wird durch mindestens eine Matrize extrudiert, wobei die Mischung gleichzeitig kompaktiert wird. Anschließend werden die Granulate auf eine Restfeuchte von weniger als 5 Gew.-% nachgetrocknet. Die drei zuletzt genannten Verfahren sind aus Kosten- und Umweltschutzaspelcten sehr ungünstig, da trockene Pigmente mit großen Mengen Wasser vermischt werden, welches zu einem späteren Zeitpunkt im Produktionsprozess wieder ausgetrieben werden muss, so dass wieder ein energie- und kostenintensiver Trocknungsschritt erfolgen muss.

Eine andere staubfreie und automatisch dosierbare Lieferform für Pigmente zum Einfärben von Baustoffen, die zu Beginn der 1980er-Jahre entwickelt wurde, ist die Flüssigfarbe, auch Slurry genannt. Das Pigment wird mit Hilfe einiger Zusatzmittel in Wasser dispergiert. Bei diesen Zusatzmitteln handelt es sich im wesentlichen um Netz- und Dispergieradditive, die die Herstellung von Flüssigfarben mit einem hohen Pigmentgehalt, bei gleichzeitig relativ geringer Viskosität erlauben. Die relativ geringe Viskosität ist erforderlich, damit die Flüssigfarbe gut dosiert werden kann. Der Feststoffgehalt der kommerziell erhältlichen Flüssigfarben beträgt in der Regel maximal 55%. Gleichzeitig soll durch die Netz- und Dispergieradditive auch die Absetzneigung weitgehend verringert werden, so dass eine ausreichende Stabilität - auch bei längerer Lagerdauer - erreicht wird. Die so erhaltenen Verbesserungen im Vergleich zum Pulverpigment sind im Wesentlichen Staubfreiheit und einfachere Dosierbarkeit. Ein weiterer Vorteil der Flüssigfarbe besteht darin, dass durch den Dispergierprozess bei der Herstellung der Flüssigfarbe die Pigmente zumindest teilweise in ihre Primärpartikel zerkleinert werden. Dadurch entfaltet sich recht rasch die volle Farbstärke, wenn die Flüssigfarbe in die Baustoffmischung eingearbeitet wird. Die Flüssigfarbe weist allerdings auch eine Reihe von Nachteilen auf. Flüssigfarbe kann im Gegensatz zu festen Pigmentformen wie Pulver oder Granulaten nur zeitlich begrenzt gelagert werden. Sie neigt im Laufe der Zeit dazu, sich zu Entmischen, das heißt, das Pigment setzt sich in den Behältern unten ab. Durch die Sedimentation entstehen in der Flüssigfarbe unerwünschte Inhomogenitäten, da sich unten im Behälter ein höherer Pigmentgehalt einstellt wie oben. Aus diesem Grunde müssen die Flüssigfarben auf Anraten der Hersteller bei längerer Lagerung - auf jeden Fall aber vor Gebrauch - homogenisiert werden. Dazu können sie entweder gerührt werden oder es wird Druckluft in die Behälter eingeblasen, mit der die Pigmentsuspension aufgewirbelt und somit wieder homogenisiert wird. Der hohe Wassergehalt der Flüssigfarben stellt besonders im Winter bei Frosttemperaturen ein Problem dar. Daher ist das Disponieren und die Lagerhaltung schwierig. Ein weiterer Nachteil der Flüssigfarbe tritt auf, wenn ihre Gebinde beschädigt werden. Die Flüssigfarbe läuft aus und es kommt zur Kontamination der Umwelt und der Mitarbeiter.

Eine alternative Form der Flüssigfarbe ist eine beim Anwender selbst hergestellte Flüssigfarbe durch Mischen des Pigmentes mit Wasser unmittelbar vor Gebrauch, die so genannte on-site-Slurry. Der Anwender bezieht dabei Pigmentpulver oder Granulat vom Hersteller, rührt diese vor Ort in Wasser ein und dosiert die Suspension anschließend zu seiner Baustoffmischung. Da solche Suspensionen in der Regel keine weiteren Zusatzmittel enthalten, sind sie nicht absetzstabil und zeigen daher auch während des Rührens stets inhomogenes Verhalten. Diese Form der Flüssigfarbe ist in den letzten Jahren in den Hintergrund gerückt.

In der DE 299 10 022 U1 wird Thermalruß für die Schwarzeinfärbung von zementgebundenen Baustoffen beschrieben. Gemäß der Lehre von DE 299 10 022 U1 ist es vorteilhaft, wenn eine wässrige flüssige Suspension (Slurry) anstelle eines Pulvers oder Granulates verwendet wird. Die WO 01/55050 offenbart eine hochviskose pastöse wässrige Aufschlämmung auf der Basis von Thermalruß zur Schwarzeinfärbung zementhaltiger Gegenstände. Die hochviskosen pastösen wässrigen Aufschlämmungen weisen sehr hohe Feststoffgehalte von mehr als 50% auf. Trotzdem sollen sie mit Pumpen förderbar sowie leicht und sicher dosierbar sein. Derart hohe Feststoffgehalte müssen jedoch durch Zusatz von Netz- und Dispergiermitteln stabilisiert werden.

Die DE 29 08 202 A1 beschreibt ein Verfahren zur Herstellung von wasserhaltigen, nichtstaubenden, gut dispergierbaren Rußpräparationen mit pulverförmigem, perlförmigem oder flüssigem Charakter, wobei der Wassergehalt so eingestellt wird, dass die Präparationen zwischen 30 und 80% Wasser enthalten. Bei der Herstellung der Rußpräparationen können auch Netz- und/oder Dispergiermittel eingesetzt werden. Die Rußpräparationen können als Färbemittel in der Papier-, Pappe- und Zementindustrie verwendet werden. Das offenbarte Herstellungsverfahren ist jedoch auf andere Pigmente nicht anwendbar.

Die kommerziell erhältlichen wässrigen Pigmentpräparationen enthalten Netz- und Dispergiermittel, um Suspensionen mit möglichst hohen Feststoffgehalten bei noch akzeptablen und verarbeitbaren Viskositäten zu erhalten. Der Zusatz von Dispergiermitteln wirkt in den Betonmischungen als Verflüssiger. Sie verzögern die Erstarrung des Betons, außerdem beeinflussen sie das Wasser-Zement-Verhältnis und wirken sich auf die Betonkonsistenz aus.

### Lieferformen zum Einfärben von Asphalt:

Außer der bereits oben erwähnten DE 4 336 613 A1, die unter anderem ein Verfahren zur Einfärbung von Asphalt mit anorganischen Pigmentgranulaten beschreibt, und der bereits erwähnten DE 100 03 248 A1, welche ein Pigmentgranulat zum Einfärben von Asphalt, Bitumen, bitumösen Stoffen und Teer offenbart, ist auch aus der DE 42 14 195 A1 ein Verfahren zur Einfärbung von Asphalt mit anorganischen Pigmentgranulaten bekannt, bei dem Öle als Bindemittel für die Pigmentgranulate verwendet werden. Es handelt sich hierbei um ein einfaches Granulationsverfahren. Auch in diesen Fällen treffen die bereit oben genannten Nachteile der Granulationsverfahren zu.

Die bereits oben erwähnte DE 197 31 698 A1 offenbart die Verwendung von Sprengmittel bei der Herstellung von Granulaten, die auch zum Einfärben von Asphalt geeignet sein sollen. Bei einem Sprengmittel handelt es sich meist um stark hydrophile Polymere mit einem entsprechend großen Absorptionsvermögen für Wasser. Ein solches Granulat würde in einer Asphaltmischung nicht ausreichend schnell und gut dispergiert, da bei der Verarbeitung von Asphalt überhaupt kein Wasser anwesend ist.

Obwohl im Stand der Technik zahlreiche Pigmentgranulate zum Einfärben von Asphalt sowie eine Vielzahl von Herstellungsverfahren beschrieben sind, werden in der Asphaltindustrie die Pigmente noch immer fast ausschließlich in pulverförmigern Zustand mit allen damit verbundenen Nachteile eingesetzt. Granulate haben sich hier noch nicht durchsetzen können.

Flüssigfarben sind aufgrund ihres hohen Wassergehaltes und des hydrophoben Charakters des Asphaltes sowie der hohen Verarbeitungstemperaturen, bei denen das Wasser verdampfen und den Herstellungsprozess stören würde, nicht zur Einfärbung von Asphalt geeignet.

### Lieferformen zum Einfärben von Dispersionsfarben und Kunststoffen:

In DE 4336612 A1 wird ein mehrstufiges Verfahren zur Herstellung von anorganischen Pigmentgranulaten aus Trockenpigmenten durch Zugabe von Ölen beschrieben, welches dem in DE 4 336 613 A1 beschriebenen Verfahren ähnlich ist. Die auf diese Weise hergestellten Pigmentgranulate sind zum Einfärben von Kunststoffen und zur Herstellung von Pulverlacken geeignet. Das in der DE 4 336 612 A1 offenbarte Verfahren weist die gleichen Nachteile auf, die sie bereits bei der DE 4 336 613 A1 genannt wurden.

Anorganische Pigmentgranulate, die zum Einfärben von Kunststoffen oder Lacken sowie zur Herstellung von wässrigen Dispersionsfarben oder Abtönpasten geeignet sind, werden auch in der DE 179 04 943 A1 erwähnt. Sie beschreibt anorganische Pigmentgranulate, unter anderem zum Einfärben von Baustoffen, Lacken und Kunststoffen und zur Herstellung von wässrigen Dispersionsfarben, Abtönpasten und Slurries. Die Granulate enthalten ein oder mehrere wasserlösliche, hydrophile oder hydrophob/hydrophile, bei 25 °C flüssige Hilfsmittel oder bei 25 °C flüssige Mischungen von wasserlöslichen, hydrophilen oder hydrophob/hydrophilen Hilfsmitteln in einer Menge von 0,1 bis 10 Gew.-%. Zur Herstellung dieser Granulate werden verschiedene Herstellungsverfahren, unter anderem Aufbau- und Sprühtrocknungs-Granulation sowie ein Kompaktierverfahren, genannt.

Die DE 100 03 248 A1 offenbart ein Pigmentgranulat zur Einfärbung von unpolaren Medien wie Asphalt, Bitumen, bitumösen Stoffen, Teer und Kunststoffen, die aus einer Mischung hergestellt werden, die Pigmente, mindestens ein die Einfärbung und die Verteilung des Pigmentes in unpolaren Medien orderndes Mittel und/oder mindestens einen Dispergator für polare Systeme sowie gegebenenfalls Lösungsmittel umfasst. Das die Einfärbung und die Verteilung des Pigments in unpolaren Medien fördernde Mittel soll vorzugsweise aus der Gruppe der Wachse ausgewählt werden. Wie die DE 197 04 943 A1 beschreibt auch die DE 100 03 248 A1 mehrere Herstellungsverfahren für Granulate. Dabei handelt es sich aber nur um die bereits oben erwähnten Verfahren, wie zum Beispiel Press- und Brikettierverfahren, Granulation nach dem Sprühtrocknungs-Verfahren, Wirbelschicht- oder Aufbau-Granulation.

Wie bereits erwähnt, offenbart die DE 103 19 483 A1 ein dispergierbares Pigmentkonzentrat, das wenigstens ein Pigment sowie gegebenenfalls Binde-, Dispergier- und Netzmittel enthält, mit einem Gehalt an einem Zerfalls-Hilfsmittel, das beim Kontakt mit Wasser (in ausreichender Menge) innerhalb von einer Minute ohne mechanische Einwirkung den im wesentlichen vollständigen Zerfall der Primärstruktur des Konzentrats unter Freisetzung des Pigments bewirkt. Ein solches Pigmentkonzentrat soll auch zum Einfärben von Kunststoffen und Kunstharzen und von Farben, Lacken und dergleichen geeignet sein. Als Zerfalls-Hilfsmittel werden vorzugsweise Cellulosefasern mit einer Teilchengröße zwischen 10 und 2000 µm eingesetzt. Derart große Partikel sind bei der Herstellung von Farben, Lacken und Kunststoffen jedoch nicht geeignet.

Der Nachteil von Pigmentgranualten zur Einfärben von Kunststoffen liegt in der unzureichenden Dispergierbarkeit. Aus diesem Grunde haben sich Pigmentgranulate bislang nicht zur Einfärbung von Kunststoffen durchsetzen können. Die hohen Verarbeitungstemperaturen bei der Herstellung der Kunststoffe können zu einem Zusammensintern der Pigmentgranulate führen, wodurch sich die Dispergierung verschlechtert. Für die Herstellung qualitativ hochwertiger Kunststoffe ist die Dispergierwirkung dann nicht mehr ausreichend.

Flüssigfarben sind aufgrund ihres hohen Wassergehaltes und des hydrophoben Charakters der Kunststoffe sowie der hohen Verarbeitungstemperaturen der Kunststoffe, bei denen das Wasser verdampfen und den Herstellungsprozess stören würde, nicht zur Einfärbung von Kunststoffen geeignet.

Pigmentgranulate zum Einfärben von Farben und Lacke setzen sich nur sehr langsam durch. Einer der Gründe ist die nahezu unendliche Vielzahl von lösemittelhaltigen und lösemittelfreien Systemen, Pulverlacken und so weiter. Die Herstellung von Granulaten erfordert den Zusatz irgendwelcher Hilfsmittel. Es ist aber bekannt, dass Hilfsmittel, die im einen System (Kombinationen aus Bindemittel, Füllstoffen, Lösemitteln und Additiven) zu sehr guter Dispergierbarkeit oder einer Verbesserung der Produkteigenschaften führen, in einem anderen System weit weniger wirksam sein können, unter Umständen kann sogar eine Unverträglichkeit beobachtet werden. So können beispielsweise hydrophobe Hilfsmittel, die bei der Einarbeitung in lösemittelhaltige Lacksysteme vorteilhaft sind, bei der Einarbeitung in wässrige Dispersionsfarben zu Schwierigkeiten führen, da die Granulate von Wasser nur sehr schlecht benetzt werden. Aus diesem Grunde wäre es im Bereich der Farben und Lacke erforderlich, für jedes Anwendungsmedium maßgeschneiderte Granulate mit den dafür optimalen Hilfsmitteln herzustellen und anzubieten. Lediglich für wasserbasierte Systeme sind in den letzten Jahren Granulate mit guten Dispergiereigenschaften auf dem Markt angeboten worden. So bietet beispielsweise die Lanxess Deutschland GmbH mit LEVANYL^{®} Gran und LEVANOX^{®} Gran ein Sortiment selbst-dispergierender, lösemittelfreier organischer und anorganischer Pigmentpräparationen in mikrogranularer Form. Diese Produkte eignen sich für viele Systeme auf Wasserbasis, wie zum Beispiel Anstrichfarben, Reinigungsmittel oder Fugenmörtel. Diese Produkte verfügen aber über einen sehr hohen Additivanteil. Sie sind deshalb keine reinen Pigmentgranulate mehr, sondern müssen als gebrauchsfertige feste Pigmentformulierungen verstanden werden. Ähnlich sind auch die so genannten Stir-in-Pigmente der BASF AG, die unter dem Namen Xfast^{™} bekannt sind, zu sehen. Diese Stirin-Pigmente liegen in granulierter Form vor und sind gebrauchsfertig, so dass sich die Farbe beim Einrühren schnell und gleichmäßig verteilt. Auch diese Produkte weisen einen sehr hohen Additivanteil von in der Regel über 20%, oftmals sogar bis zu 30%, auf und sind daher auch als gebrauchsfertige feste Pigmentformulierungen zu verstehen. Sie werden meist nur für wasserbasierte Farbe- und Lacksysteme eingesetzt.

### Lieferformen zum Einfärben von Papier:

Zum Einfärben von Papier werden auch heute noch ausschließlich Pulverpigmente verwendet. Der Grund besteht darin, dass außer dem Pulver alle anderen Lieferformen irgendwelche Hilfsmittel-Zusätze enthalten. Diese Hilfsmittel stören den ohnehin sehr anspruchsvollen Prozess der Papierherstellung. Daher werden zum Großteil direkt die pulverförmigen Pigmente für die Papiereinfärbung eingesetzt. In Ausnahmefällen werden auch die so genannten on-site-Slurries eingesetzt, bei denen dann das Pigmentpulver vor Ort zuerst in Wasser suspendiert wird, bevor es für den Färbeprozess verwendet wird.

Grundsätzlich werden von Pigmentgranulaten, unabhängig davon, aus welchem Herstellungsverfahren sie stammen, vom Markt zwei sich in der Richtung gegensätzliche Eigenschaften gefordert: mechanische Stabilität des Granulats und gute Dispergiereigenschaften im eingesetzten Medium. Die mechanische Stabilität ist verantwortlich für gute Transporteigenschaften sowohl beim Transport zwischen Hersteller und Anwender als auch für gute Dosierung und Fließeigenschaften beim Einsatz der Pigmente. Sie wird durch hohe Haftkräfte bewirkt und hängt zum Beispiel von Bindemittelmenge und -art ab. Andererseits wird die Dispergierbarkeit durch eine gute Mahlung vor der Granulierung (Nass- und Trockenmahlung), durch die mechanische Energie bei der Einarbeitung in das jeweilige Anwendungsmedium (Scherkräfte) und durch Dispergierhilfsmittel, die die Haftkräfte im Granulat bei der Einarbeitung in ein Medium sofort herabsetzen, beeinflusst. Zur Erzielung des optimalen Farbeindrucks ist ein Zerteilen der Pigmentgranulate zu Primärteilchen erforderlich. Bei anorganischen Pigmenten ist die Anwendung von größeren Mengen Dispergierhilfsmittel wegen des Kostenverhältnisses Hilfsmittel/Pigment eingeschränkt. Außerdem bewirkt ein hoher Hilfsmittelanteil eine entsprechende Herabsetzung der Farbstärke beziehungsweise des Streuvermögens.

Außerdem sollen bei allen Lieferformen, bei denen irgendwelche Hilfsmittel zugesetzt werden, wie beispielsweise Granulat oder Flüssigfarbe, die Zusätze nicht die Gebrauchseigenschaften der damit eingefärbten Endprodukte, also Baustoffe, Asphalt, Kunststoffe, Farben und Lacke nachteilig verändern, beispielsweise bei Beton die Druckfestigkeit oder das Erstarrungsverhalten, bei Asphalt die Druckfestigkeit oder Abriebfestigkeit und bei Kunststoffen die Festigkeit oder die Kerbschlagzähigkeit, bei Elastomeren (Polymeren) die elastischen Eigenschaften und bei Farben und Lacken die rheologischen Eigenschaften.

Der vorliegenden Erfindung lag die Aufgabe zugrunde, neben den bekannten festen Lieferformen für anorganische Pigmente, wie Pulver oder Granulat, und der Flüssigfarbe als flüssiger Lieferform eine völlig neue Lieferform sowohl für anorganische als auch für organische Pigmente zur Verfügung zu stellen, die staubfrei ist, nicht die Nachteile der Flüssigfarbe aufweist, zum Einfärben verschiedener Anwendungsmedien geeignet ist und außerdem einfach herzustellen ist.

Diese Aufgabe wurde gelöst durch eine Pigmentzubereitung zum Einfärben von kalk- und/oder zementgebundenen Baustoffen, Asphalt, Farben, Lacken, Papier oder Kunststoffen, enthaltend
- eines oder mehrere in einer Flüssigkeit dispergierte anorganische und/oder organische Pigmente; und
- gegebenenfalls noch weitere Hilfsmittel und/oder Füllstoffe;
   wobei die Pigmentzubereitung
- von pastöser oder gelförmiger Konsistenz ist; und
- nicht zur Entmischung der Phasen neigt.

Kalk- und/oder zementgebundene Baustoffe im Sinne dieser Erfindung sind vorzugsweise Beton, Zementmörtel, Putz und Kalksandstein. Unter dem Oberbegriff Asphalt werden Asphalt, Bitumen, sämtliche bitumösen Stoffe und Teer zusammengefasst.

Die erfindungsgemäße Pigmentzubereitung zeichnet sich unter anderem dadurch aus, dass ein oder mehrere anorganische und/oder organische Pigmente in einer Flüssigkeit dispergiert sind. Dabei können polare Flüssigkeiten oder polare Flüssigkeitsgemische, das heißt Mischungen von mindestens zwei polaren Flüssigkeiten, eingesetzt werden. Als Flüssigkeit wird vorzugsweise Wasser oder eine mit Wasser mischbare Flüssigkeit oder ein Gemisch aus mindestens zwei mit Wasser mischbaren Flüssigkeiten eingesetzt. Da der Einsatz von polaren Flüssigkeiten wie Wasser beispielsweise bei der Einfärbung von unpolaren Kunststoffen oder Asphalt unvorteilhaft ist, kann die erfindungsgemäße Pigmentzubereitung auch unpolare Flüssigkeiten oder unpolare Flüssigkeitsgemische, das heißt Mischungen von mindestens zwei unpolaren Flüssigkeiten, enthalten, in der das oder die anorganischen und/oder organischen Pigmente dispergiert sind. Als Flüssigkeit wird vorzugsweise eine mit Wasser nicht-mischbare Flüssigkeit oder ein Gemisch aus mindestens zwei mit Wasser nicht-mischbaren Flüssigkeiten eingesetzt.

Die bei der erfindungsgemäßen Pigmentzubereitung in einer Flüssigkeit dispergierten anorganischen und/oder organischen Pigmente können sowohl Bunt- als auch Unbuntpigmente (Schwarz- und Weißpigmente) sein. Als anorganische Pigmente werden vorzugsweise Eisenoxid-, Titandioxid-, Chromoxid-, Zinkoxid-, Rutilmischphasenpigmente und Ruß (Kohlenstoffpigmente) oder Mischungen davon eingesetzt. Es können aber auch Füllstoffe eingesetzt werden. Die Verwendung von Metallglanzpigrnenten oder Effektpigmenten ist auch möglich. Als organische Pigmente werden vorzugsweise Azo-, Chinacridon-, Phthalocyanin- und Perylen-Pigmente und Indigoide oder Mischungen davon eingesetzt. Auch der Einsatz von einem oder mehreren anorganischen Pigmenten in Abmischung mit einem oder mehreren organischen Pigmenten ist denkbar.

Die erfindungsgemäße Pigmentzubereitung weist vorzugsweise einen Pigmentgehalt von mindestens 15 Gew.-%, bevorzugt von mindestens 25 Gew.-%, auf. Der maximal mögliche Pigmentgehalt ist von der verwendeten Flüssigkeit und dem eingesetzten Pigment-Typ abhängig. Die Morphologie der Pigmentteilchen sowie ihre Größe und Oberflächenbeschaffenheit spielen eine ganz wichtige Rolle. Je grobteiliger das eingesetzte Pigment ist, das heißt, je größer die Primärpartikel des Pigmentes sind, desto höher sind die maximal möglichen Feststoffgehalte. Es sind Pigmentgehalte von bis 70% und mehr möglich.

Die erfindungsgemäße Pigmentzubereitung ist von pastöser oder gelförmiger Konsistenz. Unter einer pastösen Konsistenz im Sinne dieser Erfindung wird eine sehr zähflüssige oder halbfeste oder teigige, knetbare oder leicht deformierbare Masse verstanden, die nicht formbeständig ist. Eine gelförmige Konsistenz im Sinne dieser Erfindung ist eine feste und leicht deformierbare oder knetbare Masse, die formbeständig ist.

Die pastöse oder gelförmige Konsistenz der Pigmentzubereitung wird vorzugsweise durch den Zusatz mindestens eines Verdickungsmittels und/oder mindestens eines Verdickungsmittels in Kombination mit einer oder mehrerer Verbindungen, welche gemeinsam, die Festigkeit erhöhen, bewirkt.

Die Konsistenz der pastösen oder gelförmigen Pigmentzubereitung kann sich nach der Herstellung noch verändern. Wenn die Pigmentzubereitung unmittelbar nach der Herstellung abgefüllt und einige Tage nicht mehr bewegt wird, erhöht sich oftmals noch ihre Festigkeit. Dies liegt vielleicht daran, dass sich die Netzwerkstrukturen und/oder die Wasserstoff-Brückenbindungen sowie deren Zusammenspiel im Inneren der Pigmentzubereitung erst im Laufe der Zeit ausbilden und durch äußere mechanische Einwirkungen gestört werden können. Aus diesem Grunde sollte die Konsistenz der Pigmentzubereitung nicht unmittelbar nach deren Herstellung sondern frühestens nach einer 24stündigen Lagerung beurteilt werden.

Als Verdickungsmittel können sowohl organische als auch anorganische Verdickungsmittel eingesetzt werden. Die Wirkung von Verdickungsmitteln kann auf verschiedenen Effekten beruhen, wie zum Beispiel Quellung, Gelbildung, Assoziation von Micellen, Solvatation, Ausbildung von Netzwerkstrukturen und/oder Wasserstoff-Brückenbindungen, und deren Zusammenspiel. Die Verdickungsmittel beeinflussen die Konsistenz der Pigmentzubereitung. Dies geschieht durch die Erhöhung der Viskosität, durch Ausbildung einer Gelstruktur und gegebenenfalls auch durch Herabsetzung der Oberflächenspannung. Vorzugsweise werden solche Verdickungsmittel eingesetzt, die zur Ausbildung einer Gelstruktur fähig sind.

Organische Verdickungsmittel wie organische natürliche Verdickungsmittel, organische abgewandelte Naturstoffe, organische vollsynthetische Verdickungsmittel, organische assoziative Verdickungsmittel oder niedermolekulare organische Produkte werden vorzugsweise eingesetzt. Zu den bevorzugten organischen natürlichen Verdickungsmitteln zählen beispielsweise Agarose, Agar-Agar, Carrageene in der Iota-, Kappa- oder Lambda-Form, Tragant, Gummi arabicum, Algin, Pektine mit hohem oder niederem Veresterungsgrad, Polyosen, Guar-Mehl, Carubin (Johannisbrot-Kernmehl), Tarakern-Mehl, Karaya, Gellan, Xanthan, Stärke, Stärkephosphate, Dextrine, Gelatine oder Casein. Algin ist als Sammelbegriff für alle polysacchariden Inhaltsstoffe aus den Zellwänden der Braunalgen zu verstehen. Diese umfassen die Alginsäure und ihre Salze, die Alginate, sowie die Derivate der Alginsäure. Die Handelsprodukte werden meist Alginate genannt. Unter Agarose oder Agar-Agar, auch kurz nur Agar genannt, sind polysaccharide Inhaltsstoffe aus den Zellwänden verschiedener Rotalgen zu verstehen. Agar-Agar ist ein Gemisch aus zwei Fraktionen: der gelierenden Agarose mit bis zu 70% und dem nicht-gelierenden Agaropektin mit bis zu 30%. Unter der Bezeichnung Carrageen wird auch Carrageenan, sowie die halbsynthetischen Produkte, die nur eine Ionensorte enthalten und oftmals Carrag(h)eenate genant werden, verstanden. Die drei Begriffe sind gleichbedeutend.

Im folgenden soll auf einige der bevorzugten organischen natürlichen Verdickungsmittel und ihre Eigenschaften noch kurz näher eingegangen werden.

Agar ist in kaltem Wasser unlöslich, in der Hitze löst er sich und geliert beim Abkühlen ähnlich wie Carrageen, wobei man sich ebenfalls die Bildung eines dreidimensionalen Netzes durch Doppelhelices und Helixassoziationen vorstellt. Die Gele erhalten ihre Stabilität allein durch Wasserstoff-Brückenbindungen. Agar geliert schon in 0,5%iger wässriger Lösung unabhängig von Kationen. Die Gele sind stärker als Carrageen-Gele und sind thermoreversibel. Allerdings zeigen sie eine recht starke Hysterese, das heißt es existiert ein Unterscheid zwischen der Erweichungs- und der Geliertemperatur des Gels: Der Gelierpunkt liegt bei 45 °C, während zum Schmelzen bis auf 90 °C erhitzt werden muss.

Beim Carrageen unterscheidet man im Wesentlichen drei Hauptbestandteile: Kappa-, Iota- und Lambda-Carrageen. Auf weitere Carrageen-Typen, die ebenfalls mit griechischen Buchstaben bezeichnet werden, wie zum Beispiel Alpha-, Beta-, Pi- oder Omega-Carrageen soll hier nicht näher eingegangen werden. Beim Carrageen wird die Festigkeit des Gels durch eine Doppelhelix-Struktur bewirkt. Von Kappa-Carrageen und Iota-Carrageen ist bekannt, dass die diäquatorialen glykosidischen Bindungen beim Abkühlen warmen Lösungen die Möglichkeit zur Bildung von Doppelhelices bieten. Auf diese Weise entstehen Haftzonen und ein dreidimensionales Netzwerk: Es entsteht ein Gel. Beim Erhitzen entfalten sich die Helices wieder und man erhält wieder eine zufällige Verknäuelung der Moleküle: Das Gel schmilzt. Die Carrageen-haltigen Gelen zeichnen sich durch eine geringe Hysterese aus. Im Gelzustand können sich die Helices untereinander assoziieren: Das bedeutet ein Zusammenziehen des Netzes, das Gel wird spröder und zeigt Synärese. Die mit Kappa-Carrageen hergestellten Wassergele sind spröde und neigen zur Trübung und Synärese. Das kann durch Mischen mit Iota-Carrageen vermieden werden. Allein Iota-Carrageen bildet klare Wassergele, die keine Synärese aufweisen, eine sehr geringe Hysterese haben aber auch ziemlich schwach sind.

Pektine sind hochmolekulare glycosidische Pflanzeninhaltsstoffe, die in Früchten, Wurzeln und Blättern weit verbreitet sind. Die Pektine bestehen im wesentlichen aus Galacturonsäure-Einheiten, deren Säuregruppen zu 20 bis 80% mit Methanol verestert sind. Bei den Pektinen wird zwischen hochveresterten Pektinen mit einem Veresterungsgrad von über 50% und niedrigveresterten Pektinen mit einem Veresterungsgrad von unter 50% unterschieden. Man unterscheidet schnell gelierendes Pektin (Veresterungsgrad 72 bis 74%), normal gelierendes Pektin (Veresterungsgrad 68 bis 71%) und langsam gelierendes Pektin (Veresterungsgrad 61 bis 68%). Die Gele der hochveresterten Pektine sind nicht hitzereversibel. Niedrigveresterte Pektine mit einem Veresterungsgrad von mindestens 20% benötigen zur Gelbildung Calcium-Ionen. Calcium-Pektinat-Gele sind hitzereversibel.

Guar-Mehl ist ein kolloides, weißes bis grauweißes Pulver, das durch Mahlen des Endosperms der Samen des Cyamopsis tetragonolobus gewonnen wird. Guar-Mehl quillt als Hydrokolloid in Wasser auf, ohenjedoch eine klare Lösung zu bilden und hat etwa die achtfache Verdickungskraft der Stärke. Lösungen von Guar-Mehl müssen konserviert werden.

Carubin (Johannisbrot-Kernmehl) ist das vermahlene Endosperm der Samen der Früchte des Johannisbrotbaumes (Ceratonia siliqua). Carubin ist ein weißes bis weiß-graues Pulver. In Wasser bei 20 °C ist es nur teilweise, bei 80 bis 90 °C vollständig löslich.

Karaya, auch Karaya-Gummi genannt, ist ein weißes bis bräunliches Pulver, das in Wasser bis zum 60 bis 100fachen seines Volumens quillt und einen viskosen Schleim mit starker Klebkraft bildet. Die Viskosität einer wässrigen Karaya-Suspension ist abhängig vom pH-Wert (maximal pH 7 bis 10) und fällt im stärker sauren wie auch alkalischen Medium stark ab.

Die physikalischen und chemischen Eigenschaften von Tarakern-Mehl entsprechen weitgehend jenen von Guar-Mehl und Carubin. Tarakern-Mehl ist in kaltem Wasser nicht vollständig löslich; die Lösungen besitzen eine signifikant höhere Viskosität als gleich konzentrierte Lösungen von Guar-Mehl oder Carubin. Ähnlich wie Carubin gibt Tarakern-Mehl Gele mit Xanthan, nur sind letztere schwächer und die Schmelzpunkte der Gele liegen tiefer. Auch bei Agar und Carrageen zeigt Tarakern-Mehl synergistische Gelverstärkungen.

Gellan-Gele sind über einen weiten Temperatur- und pH-Bereich stabil und ihre Festigkeit ist durch Veränderung der Salzkonzentration variierbar. Auch die Substituenten beeinflussen die Gelierfähigkeit: Natives Gellan, welches mit Acetat verestert ist, bildet weiche Gele, während die Gele des unsubstituierten Gellans fest sind. Gellan bildet nach Erhitzen und Abkühlen thermoreversible Gele, wobei die Anwesenheit von ein- und zweiwertiger Kationen notwendig ist.

Xanthan ist ein mikrobielles, anionisches Polysaccharid, das von Xanthomonas campestris unter geeigneten Kulturbedingungen ausgeschieden wird. Xanthan nimmt in wässriger Lösung relativ starre, regelmäßige, helikale Strukturen an. Es können Einfachhelices wie auch Doppelhelices vorliegen. Xanthan löst sich gut in heißem und kaltem Wasser. Dabei bilden die Helices ein dreidimensionales Netzwerk, welches höhere Viskositäten verursacht. Xanthane besitzen sehr geringe Temperaturabhängigkeit und ist über einen weiten pH-Bereich von 1 bis 11 stabil.

Als wichtigste Vertreter der bevorzugten organischen abgewandelten Naturstoffe seien Hydroxyethylcellulose, Carboxymethylcellulose, Hydroxypropylmethylcellulose, Hydroxypropylcellulose, Ethylhydroxyethylcellulose oder andere Cellulosether genannt. Ihre verdickende Wirkung in Wasser wird durch Hydratation, intermolekulare und intramolekulare Wasserstoff-Brückenbindung und durch Verknäuelung der Molekülketten erreicht.

Bevorzugte organische vollsynthetische Verdickungsmittel können Polyvinylalkohole, Polyacrylsäuren und Polymethacrylsäuren sowie deren Salze, Polyacrylamide, Polyvinylpyrrolidon, Polyetherglycole, Styrol-Maleinsäureanhydrid-Copolymerisate sowie deren Salze sein. Zu den Polyacrylsäuren und Polymethacrylsäuren sowie deren Salze zählen auch die Copolymere und Terpolymere von Acrylsäure und Methacrylsäure. Diese Verdickungsmittel werden als wässrige Lösung oder saure Emulsion angeboten und gehen erst beim Neutralisieren in hochviskose Lösungen über.

Bevorzugt sind auch organische assoziative Verdickungsmittel. Sie unterscheiden sich von den oben erwähnten organischen abgewandelten Naturstoffen und den organischen vollsynthetischen Verdickungsmitteln dadurch, dass sie neben wasserlöslich-machenden hydrophilen Gruppen auch hydrophobe End- oder Seiten-Gruppen im Molekül enthalten. Dadurch bekommen assoziative Verdickungsmittel Tensid-Charakter und sind zur Bildung von Micellen fähig. Als assoziative Verdickungsmittel seien beispielhaft genannt: hydrophob modifizierte Polyacrylate, die in einem anionischen Acrylat-Verdickermolekül eingebaute nichtionogene hydrophile und hydrophobe Gruppen enthalten, hydrophob modifizierte Celluloseether, die in ein Celluloseether-Molekül eingebaute langkettige Alkylepoxide oder Alkylhalogenide enthalten, hydrophob modifizierte Polyacrylamide, hydrophob modifizierte Polyether oder assoziative Polyurethan-Verdicker, die aus über Urethan-Gruppen verknüpften hydrophilen, relativ hochmolekularen Polyether-Segmenten bestehen und mit mindestens zwei endständigen hydrophoben Molekülgruppen verkappt sind. Die assoziativen Verdickungsmittel können vorteilhaft besonders dann eingesetzt werden, wenn hydrophobe und nicht mit Wasser mischbare Flüssigkeiten in der erfindungsgemäßen Pigmentzubereitung vorhanden sind. Beispiele für bevorzugte niedermolekulare organische Produkte, die als Verdickungsmittel wirken können, sind Metallseifen, gehärtetes Ricinusöl, modifizierte Fettderivate oder Polyamide. Bevorzugte Metallseifen sind Metallseifen, die von organischen Carbonsäuren mit 8 bis 22 Kohlenstoffatomen und bevorzugt mit 12 bis 18 Kohlenstoffatomen abgeleitet sind, wie Zinkstearat, Magnesiumstearat, Lithiumstearat, Zinklaurat oder Magnesiummyristat.

Als Verdickungsmittel werde vorzugsweise anorganische Verdickungsmittel eingesetzt. Bevorzugte anorganische Verdickungsmittel können beispielsweise Kieselsäuren oder Polykieselsäuren sein. Für wässrige oder hydrophile Systeme sind auch Schichtsilikate geeignet, die in Wasser bei Anwesenheit ausreichender Scherkräfte und im geeigneten pH-Bereich zum Aufbau pastöser oder gelartiger Strukturen führen. Die wichtigste Untergruppe der Schichtsilikate sind die Smektite mit den Untergruppen Montmorillonit und Hectorit. Durch die Behandlung mit quarternären Ammonium-Verbindungen entstehen aus hydrophilen

Smektiten hydrophobe Organoschichtsilikate, die dann für organophile Systeme geeignet sind. Organoschichtsilikate können vorteilhaft besonders dann eingesetzt werden, wenn hydrophobe und nicht mit Wasser mischbare Flüssigkeiten in der erfindungsgemäßen Pigmentzubereitung vorhanden sind.

Vorzugsweise werden mehrere Verdickungsmittel eingesetzt, die in Kombination miteinander einen synergistischen Effekt besitzen und ihre verdickende Wirkung verstärken. Als Beispiele für Verdickungsmittel, welche in Kombinantion miteinander einen synergistischen Effekt besitzen, seien an dieser Stelle nur die Kombinationen von Xanthan mit Dextrin und vor allem mit Galaktomannanen, wie beispielsweise Carubin, Guar-Mehl und Tarakern-Mehl, genannt. Mit Carubin bildet Xanthan beispielsweise starke, gummiartige und thermoreversible Gele. Es wird angenommen, dass beim Xanthan ähnlich wie bei Carrageen und Agar eine Doppelhelixstruktur ausgebildet wird, welche für die ausgeprägte Plastizität und Fließgrenze verantwortlich ist. Mit Hilfe der glatten Segmente von Galaktomannan-Molekülen werden die Doppelhelices zu einem dreidimensionalen Netz verbunden. Besonders interessant ist der synergistische Effekt zwischen Kappa-Carrageen und Carubin. Ersetzt man einen Teil des Carrageens durch Carubin, das selbst nicht geliert, dann wird das Gel stärker und seine Eigenschaften besser: Es wird elastischer und neigt viel weniger zur Trübung und Synärese. Auch Agar zeigt einen Synergismus mit Carubin.

Es ist möglich die Festigkeit der Pigmentzubereitung mit ihrer pastösen oder gelförmigen Konsistenz durch Zugabe einer oder mehrerer Verbindungen zu erhöhen. Vorzugsweise wird mindestens ein Verdickungsmittel in Kombination mit einer oder mehrerer Verbindungen, welche gemeinsam die Festigkeit erhöhen, in einer Gesamtmenge von 0,001 bis 10 Gew.-%, besonders bevorzugt von 0,1 bis 5 Gew.%, bezogen auf die Pigmentzubereitung eingesetzt. So ist bekannt, dass zahlreiche Polyhydroxyverbindungen wie Polyvinylalkohole oder Polysaccharide wie zum Beispiel Carubin in Kombination mit geringen Mengen Borax oder Boraten zu einer starken Viskositätserhöhung neigen und schließlich Gelieren. Dieser Effekt tritt nicht nur in Wasser, sondern beispielsweise auch in Formamid auf. Bei den Pektinen wird zwischen hochveresterten Pektinen mit einem Veresterungsgrad von über 50% und niedrigveresterten Pektinen mit einem Veresterungsgrad von unter 50% unterschieden. Bei den hochveresterten Pektinen kommt es in Teilberechen der Pektin-Kette durch Wasserstoff-Brückenbindung zu Assoziationen, wodurch sich ein dreidimensionales Netzwerk ausbildet. Die Unregelmäßigkeiten im Molekül bewirken nur kurze Haftstellen. Zu deren Stabilisierung muss die Aktivität des Wassers herabgesetzt werden und die Dissoziation vermindert werden. Beides gelingt durch Zusatz von Zucker (zum Beispiel Saccharose) und Säure (zum Beispiel Fruchsäuren wie Citronensäure oder Apfelsäure). Je höher der Veresterungsgrad ist, desto schneller neigt das Pektin zur Gelbildung. Niedrigveresterte Pektine mit einem Veresterungsgrad von mindestens 20% benötigen zur Gelbildung Calcium-Ionen, welche mit den Carboxy- und Hydroxy-Gruppen der durch axial-axial Bindungen verknüpfter Galacturonsäure-Bausteine Kettenassoziate bilden. Die Calcium-Ionen müssen im Unterschuss bleiben und dürfen nur langsam mit dem Pektin-Molekül reagieren. Letzteres wird durch Verwendung von unlöslichen Calciumsalzen wie Citrat oder Phosphat erreicht. Amidierte Pektine nehmen eine Mittelstellung ein. Sie benötigen Calcium-Ionen zur Gelbildung, neigen aber nicht zur Koagulation bei Calcium-Überschuss. Auch beim Algin spielen Kationen bei der Gelbildung eine große Rolle. Schon kleine Mengen an Calcium-Ionen können die Viskosität durch Komplexbildung stark erhöhen. Dabei ist die Empfindlichkeit gegenüber Calcium-Ionen wesentlich höher wie beim Pektin, vermutlich aufgrund des höheren Polymerisationsgrades. Die Haftstellen sind stärker als beim Pektin. Im Gegensatz zum Pektin sind Calcium-Alginat-Gele auch in Abwesenheit von Zucker nicht hitzereversibel. Beim Carrageen wird die Festigkeit des Gels durch eine Doppelhelix-Struktur bewirkt. Dabei hat die Anwesenheit von Kationen einen ganz wesentlichen Einfluss auf die Festigkeit des Gels. Ein Kappareiches Carrageen-Präparat mit 0,2% Kalium-Salz vermischt ergibt bereits in Konzentrationen von 0,5% ein festes Gel aus Wasser mit einem Gelierpunkt von ca. 40°C und einem Schmelzpunkt von ca. 55 °C. Die Festigkeit des Wassergels steigt mit der Konzentration an Kalium-Ionen stark an. Ein Zusatz von Zucker erhöht ebenfalls die Gelfestigkeit. Diese Zusätze erhöhen sowohl die Geliertemperatur als auch die Schmelztemperatur der Gele; in jedem Fall bleibt die Hysterese, das heißt der Unterscheid zwischen der Erweichungs- und der Geliertemperatur des Gels, aber gering und liegt zwischen 10 und 15°C.

Als Verdickungsmittel werden vorzugsweise Algenextrakte wie Agar-Agar, Carrageene in der Iota-, Kappa- oder Lambda-Form, Alginate wie Natriumalginat oder Calciumalginat, Exsudate von Mirkoorganismen oder Pflanzen wie Xanthan und seine Derivate, Gellan, Gummi arabicum, Tragant, Karaya-Gummi oder Ghatti-Gummi, Endosperme der Samen von Früchten oder Pflanzen wie Guar-Mehl, Carubin oder Tarakern-Mehl, Fruchtextrakte wie Pektine, Verdickungsmittel tierischen Ursprungs wie Proteinderivate und Gelatine von Rindern, Schweinen, Fischen sowie Caseinate, oder Gemische dieser Verbindungen eingesetzt.

Als Verbindung beziehungsweise Verbindungen, welche in Kombination mit mindestens einem Verdickungsmittel gemeinsam die Festigkeit erhöhen, wird beziehungsweise werden vorzugsweise Carbonate, Hydrogencarbonate, Sulfate, Glycerinphosphate, Borate, Chloride, Nitrate, Phosphate, Acetate, Hydroxide der einwertigen, zweiwertigen oder dreiwertigen Metallsalze sowie die Salze von α-Hydroxysäuren (Citraten, Tartraten, Lactaten und Malaten) oder von Fruchtsäuren oder auch den Salzen von Aminosäuren (Aspartat Arginat, Glykocholat und Fumarat) und bevorzugt Salze der Alkali- und Erdalkalimetalle, vor allem Natrium-, Kalium-, Magnesium-, Calcium- oder Strontiumsalze, bevorzugt Natriumnitrat, Kaliumnitrat, Magnesiumnitrat, Calciumnitrat, Strontiumnitrat, Natriumboraten, Kaliumboraten, Calciumboraten, Magnesiumboraten, Natriumchlorid, Kaliumchlorid, Magnesiumchlorid, Calciumchlorid, Strontiumchlorid, Natriumsulfat, Kaliumsulfat, Magnesiumsulfat, Calciumsulfat, Calciumphosphat, Magnesiumacetat, Calciumacetat oder aus Gemischen dieser Salze eingesetzt. Die Menge der Verbindung beziehungsweise der Verbindungen liegt beziehungsweise liegen vorzugsweise im Bereich von 0,001 bis 3 Gew.-% und bevorzugt im Bereich von 0,1 bis 1,5 Gew.-% bezogen auf das Gesamtgewicht der Pigmentzubereitung.

Nicht nur Salze können in Kombination mit einem Verdickungsmittel, die Festigkeit erhöhen. Der gleiche Effekt ist auch von Molekülverbindungen bekannt: Daher werden vorzugsweise auch Molekülverbindungen eingesetzt, die in Kombination mit einem Verdickungsmittel, die Festigkeit erhöhen. Wie bereits erwähnt können hochveresterte Pektine durch Wasserstoff-Brückenbindung ein dreidimensionales Netzwerk ausbilden. Die Unregelmäßigkeiten im Molekül bewirken aber nur kurze Haftstellen. Durch den Zusatz von Zucker (zum Beispiel Saccharose) kann eine zusätzliche Stabilisierung erreicht werden. Auch bei Gelen aus Carrageen kann durch Zusatz von Zucker die Gelfestigkeit erhöht werden. Agarose-Gele erhalten ihre Stabilität ebenfalls allein durch Wasserstoff-Brückenbindungen. Eine zusätzliche Stabilisierung wird zum Beispiel durch Vernetzung mit 2,3-Dibrom-1-propanol erreicht.

Als Verbindungen, die in Kombination mit einem Verdickungsmittel, die Festigkeit erhöhen, können neben Salzen und Molekülverbindungen auch Komplexverbindungen von Metallen eingesetzt werden. Vorzugsweise werden Komplexe von Elementen der IV. bis VI. Nebengruppe des Periodensystems, insbesondere von Titan, Vanadium und Chrom, eingesetzt.

Die Menge der Verbindung beziehungsweise der Verbindungen, welche in Kombination mit einem Verdickungsmittel, die Festigkeit erhöhen, liegt vorzugsweise im Bereich von 0,001 bis 3 Gew.-%, bevorzugt im Bereich von 0,1 bis 1,5 Gew.-%, bezogen auf das Gesamtgewicht der Pigmentzubereitung.

Als Verdickungsmittel werden vorzugsweise vollhydrolysierte Polyvinylalkohole sowie deren Derivate oder andere Polyhydroxyverbindungen in Kombination mit Borverbindungen, bevorzugt *ortho*-Borsäure, *tetra*-Borsäure, *meta*-Borsäure oder deren Salze, oder in Kombination mit Salzen oder Komplexen von Elementen der IV. bis VI. Nebengruppe des Periodensystems, bevorzugt von Titan, Vanadium und Chrom, wie Titan-(III)-Salze oder Titan-(IV)-Triethanolamin, gegebenenfalls unter neutraler oder schwach alkalischer Einstellung des pH-Wertes, eingesetzt. Außer den verschiedenen Borsäuren oder deren Salzen sowie Borsäureanhydrid oder Borfluorwasserstoffsäure werden auch organische Borverbindungen wie Borsäureester oder Komplexe von Bortrifluorid beispielsweise mit Dimethylether, Propanol oder Essigsäure bevorzugt.

Die regelmäßig angeordneten Hydroxylgruppen der Polyvinylalkoholketten sind in der Lage, mit bestimmten Substanzen chemisch mehr oder weniger stabile Komplexverbindungen bzw. Assoziate zu bilden, die in Abhängigkeit von der Konzentration der Beimischung Viskositätserhöhung bis Gelierung der Polyvinylalkohollösung ergeben. Das klassische Beispiel für die Komplexbildung mit Polyvinylalkohol ist seine Reaktion mit Borsäure einerseits und Salzen der Borsäure andererseits. Die Reaktion mit Borsäure ergibt einen Monodiolkomplex. Die Viskosität von Lösungen dieser Monodiolkomplexe hängt vor allem von der Kettenlänge und vom Hydrolysegrad des Polyvinylalkohols ab. Anders verhält sich eine Polyvinylalkohollösung bei Einwirkung von Borsäuresalzen beziehungsweise eine borsäurehaltige Lösung bei pH-Verschiebung ins Alkalische. Der Polyvinylalkohol-Borsäure-Monodiolkomplex bildet dabei als Polyelektrolyt den Polyvinylalkohol-Borsäure-Didiol-Komplex, in welchem zwei Polyvinylalkoholketten über Borsäure miteinander verknüpft sind. Für diesen Fall sind aber auch Strukturen mit ionischer Bindung denkbar. Außer *ortho-*Borsäure, *tetra*-Borsäure, *meta*-Borsäure oder deren Salzen oder Borsäureanhydrid oder Borfluorwasserstoffsäure können auch organische Borverbindungen wie Borsäureester oder Komplexe von Bortrifluorid beispielsweise mit Dimethylether, Propanol oder Essigsäure eingesetzt werden.

Die Viskosität von Polyvinylalkohollösungen kann außer mit Borsäure und ihren Salzen auch mit komplexbildenden Verbindungen der Elemente der IV. bis VI. Nebengruppe des Periodensystems angehoben werden. Diese Viskositätserhöhung führt unter Umständen bis zur Gelierung der Lösung. Der sich bildende Komplex kann in vielen Fällen thermisch fixiert werden. Der Titan-IV-Triethanolamin-Komplex zum Beispiel liefert mit Polyvinylalkohollösung hochviskose bis gelierende Titan-IV-Komplexe. Die durch diesen Komplex hervorgerufene Viskositätserhöhung ist weitgehend pH-Wert-unabhängig. Ähnlich reagiert auch Titansulfat mit Polyvinylalkohollösung unter Bildung eines Titan-IV-Poiyvinylalkohol-Komplexes. Titan-III-, Vanadium- und Chromverbindungen bewirken schon in geringen Konzentrationen eine Gelierung der Polyvinylalkohollösung. Organische Verbindungen können ebenfalls zur Anhebung der Viskosität von Polyvinylalkohollösungen führen. Auch die Acetalisierung von Polyvinylalkohol, zum Beispiel mit Formaldehyd und Säure (als Katalysator), ist in diese Betrachtung mit einzubeziehen. Geringe Mengen führen zur Eindickung der Polyvinylalkohollösung bis hin zur Gelierung. Abstoppen der Acetalisierungsreaktion mit Lauge fixiert die erreichte Konsistenz der Mischung. Auch durch die Acetalisierung von Polyvinylalkohol mit bifunktionellen Aldehyden wie Glyoxal oder Glutaraldehyd können unter sauerer Katalyse Gele hergestellt werden. Mehrwertige Phenole und verwandte Verbindungen wie Resorcin, Brenzkatechin, Phloroglucin, Gallussäure, Salicylanilid und 2,4-Dihydroxybenzoesäure können mit Polyvinylalkoholen relativ lockere Komplexe (Assoziate) bilden. Diese Assoziate sind thermisch reversibel, das heißt man ist in der Lage, Gele herzustellen, die bei erhöhter Temperatur flüssig werden und sich beim Abkühlen wieder verfestigen.

Überraschenderweise tritt Viskositätserhöhung bis Gelierung der Polyvinylalkohollösung mit den oben genannten Substanzen auch dann ein, wenn ein oder mehrere anorganische und/oder organische Pigmente in der Polyvinylalkohollösung dispergiert sind. Polyvinylalkohole oder deren Derivate sind in ganz vorzüglicher Weise zu Herstellung der erfindungsgemäßen Pigmentzubereitungen geeignet sind. Die pastösen oder gelförmigen Pigmentzubereitungen, die ausgehend von Wasser unter Zusatz von teil- oder vollhydrolysierten Polyvinylalkoholen in Kombination mit *ortho*-Borsäure, *tetra*-Borsäure, *meta*-Borsäure oder deren Salzen hergestellt werden, zeichnen sich durch einige ganz hervorragende anwendungstechnische Eigenschaften aus: Die Konsistenz der Pigmentzubereitungen kann durch die Kettenlänge, die Konzentration und den Hydrolysegrad (Verseifungsgrad) des Polyvinylalkohols sowie über die Menge der zugesetzten Borsäure oder ihrer Salze oder der zugesetzten komplexbildenden Verbindungen der Elemente der IV. bis VI. Nebengruppe des Periodensystems über einen sehr weiten Bereich variiert werden. Es kann sowohl eine Pigmentzubereitung mit einer sehr weichen, pastösen und fadenziehenden Konsistenz hergestellt werden, wie auch eine Pigmentzubereitung mit einer recht harten und gummielastischen Konsistenz. Bevorzugt werden außer teil- oder vollhydrolysierten Polyvinylalkoholen, auch andere Polyhydroxyverbindungen in Kombination mit *ortho*-Borsäure, *tetra*-Borsäure, *meta*-Borsäure oder deren Salzen eingesetzt. Dazu zählen beispielsweise Polysaccharide auf Basis von Mannane, Galactomannan, wie beispielsweise Carubin, Polymannuronsäure, Polygalacturonsäure, Rhamnose, Galactose, Galacturonsäure, Arabinose, Xylose, Glucuronsäure, Mannose, Glukose oder Galactan. Dabei ist es unerheblich, ob diese Polysaccharide als lineares, verzeigtes oder stark verzweigtes Makromolekül vorliegen. Die genannten Polyhydroxyverbindungen kommen in der Natur vor, beispielsweise in den Samen von Ceratonia siliqua (Carubin), Medicago sativa, Gleditsia triacanthus, Trigonella foenum graecum, Cyamopsis tetragonolobus (Guar-Mehl) oder Lupinus albus. Sie kommen in der Natur auch als Schleime vor, beispielsweise als Schleim aus der Rinde von Ulmus fulva oder als Schleim aus Linum usitatissimum oder aus Tamarindus indica. Sie können in der Natur auch als Gummi vorkommen, beispielsweise als Kirschgummi (Prunus avium) oder Gummi arabicum.

Viele Verdickungsmittel oder Gelbildner wirken nicht nur in Wasser, sondern auch in anderen polaren Lösungsmitteln. Beispielsweise lösen sich hoch- und niedrigveresterte Pektine sowie die Alkalisalze der Pektinsäure nicht nur in Wasser, sondern auch in Dimethylformamid, Dimethylsulfoxid und warmem Glycerin. Polysaccharide, die in wässriger Lösung mit Borax gelieren, zeigen diese Erscheinung auch in Formamid. Auch Gelatine löst sich in Ethylenglycol, Gylcerin und Formamid.

Die erfindungsgemäße Pigmentzubereitung kann gegebenenfalls noch weitere Hilfsmittel enthalten. Als Hilfsmittel werden vorzugsweise Salze aus der Gruppe der Phosphate, Phosphonate, Carbonate, Sulfate, Sulfonate, Silikate, Aluminate, Borate, Titanate, Formiate, Oxalate, Citrate, Tartrate, Stearate, Acetate, Polysaccharide wie beispielsweise Cellulosen, Cellulosederivate, wie Celluloseether oder Celluloseester, Phosphonocarbonsäuren, modifizierte Silane, Silikonöle, Öle aus biologischem Anbau (bevorzugt Rapsöl, Sojabohnenöl, Maiskeimöl, Olivenöl, Kokosöl, Sonnenblumenöl), raffinierte Erdöle auf paraffinischer und/oder naphthenischer Basis, synthetisch hergestellte Öle, Alkylphenole, Glykole, Polyether, Polyglykole, Polyglykolderivate, Ethylenoxid-Propylenoxid-Copolymere, Eiweißfettsäurekondensationsprodukte, Alkylbenzolsulfonate, Alkylnaphthalinsulfonate, Ligninsulfonate, sulfatierte Polyglykolether, Melaminformaldehydkondensate, Naphthalinformaldehydkondensate, Gluconsäure, Polyacrylate, Polycarboxylatether, Polyhydroxyverbindungen, Polyhydroxyaminoverbindungen oder Lösungen oder Mischungen oder Suspensionen oder Emulsionen davon eingesetzt.

Als Hilfsmittel werden vorzugsweise Netzmittel und/oder Dispergieradditive und/oder Emulgatoren und/oder Konservierungsstoffe und/oder Entschäumer und/oder Retentionsmittel und/oder Absetzverhinderer und/oder Duftstoffe eingesetzt.

Als Netzmittel sind vorzugsweise Alkylbenzolsulfonate, Fettalkoholsulfate, Fettallcoholethersulfate, Fettalkoholethoxylat, Alkylphenolethoxylat, verzweigte und/oder unverzweigte Alkan- oder Olefinsulfonate, verzweigte und/oder unverzweigte Alkan- oder Olefinsulfate und Sulfosuccinate geeignet.

Als Dispergieradditive werden vorzugsweise Liginsulfonate, Melaminsulfonate, Naphthalinsulfonate, Seifen, Metallseifen, Polyvinylalkohole, Polyvinylsulfate, Polyacrylamide, Polyacrylate, Polycarboxylatether, mittel- und langkettige Alkansulfate oder -sulfonate oder -sulfosuccinate sowie mittel- und langkettige Alkanphosphate oder -phosphonate eingesetzt.

Als Emulgatoren kommen vorzugsweise Emulgatoren mit HLB-Werten von 7 bis 40, bevorzugt von 8 bis 18, für den Einsatz in Baustoffen mit wässrigen Systemen wie zum Beispiel Beton in Frage, enthaltend Alkyl- oder Acryl-Reste und hydrophile Zwischen- und Endgruppen wie zum Beispiel Amide, Amine, Ether, Hydroxyl, Carboxylat, Sulfat, Sulfonat, Phosphat, Phosphonat, Amin-Salz, Polyether, Polyamid, Polyphosphat. Die Substanzen können entsprechend ihrem HLB-Wert einzeln oder in Kombination eingesetzt werden.

Als Konservierungsstoffe seien beispielhaft Formaldehyd-abspaltende Verbindungen, phenolische Verbindungen oder Isothiazolinon-Zubereitungen genannt. Der Zusatz derartiger Konservierungsstoffe ist oft ratsam, da viele organische Verdickungsmittel empfindlich gegen mikrobiellen Angriff sind und durch Zusatz von Konservierungsstoffen stabilisiert werden können.

Des weiteren kommen vorzugsweise auch Entschäumer zum Einsatz. Unter Entschäumern werden Substanzen verstanden, die eine Bildung von Schaum verhindern sollen. Sie wirken, indem sie an der Grenzfläche der pastösen oder gelförmigen Pigmentzubereitung zu Luft einen geschlossenen Film bilden und es dadurch dem zu entgasenden/-schäumenden Medium ermöglichen, in sehr kurzer Zeit unter Zerstörung der Gasbläschen eine kleinere Oberfläche auszubilden und damit einen energieärmeren Zustand auszubilden. Entschäumer leiten sich oft von natürlichen Fetten und Ölen ab oder es handelt sich um Petroleum-Derivate, modifizierte Silikonöle oder modifizierte Polyether.

Als Duftstoffe werden alle Substanzen bezeichnet, die einen mehr oder weniger starken Geruch aufweisen und den Geruchssinn des Menschen anregen. Vorzugsweise werden Duftstoffe eingesetzt werden, die den Geruchssinn des Menschen in angenehmer oder stimulierender Weise anregen. Die bevorzugten Duftstoffe können natürlichen, halbsynthetischen oder vollsynthetischen Ursprungs sein, wobei die natürlich vorkommenden Duftstoffe pflanzlicher oder tierischer Herkunft sein können. Die Duftstoffe können einzeln oder in Kombination miteinander eingesetzt werden.

Die Hilfsmittel werden vorzugsweise in einer Gesamtmenge von 0,001 bis 10 Gew.-%, bevorzugt von 0,05 bis 5 Gew.-%, bezogen auf die Pigmentzubereitung eingesetzt.

Die erfindungsgemäße Pigmentzubereitung neigt vorzugsweise über einen Zeitraum von mindestens zwei Monaten, bevorzugt von mindestens sechs Monaten, nicht zur Entmischung der Phasen. Das heißt, dass sich die flüssige Phase während dieser Zeit aus der pastösen oder gelflörmigen Pigmentzubereitung nicht absondert. Bei einem Gel wird diese Erscheinung Synärese genannt. Bei der Synärese tritt die flüssige Phase aus einem Gel aus, ohne dass dessen Struktur zusammenbricht. Dies wird auch als Ausschwitzen bezeichnet. Die erfindungsgemäßen pastösen oder gelförmigen Pigmentzubereitungen bleiben also über einen Zeitraum von vorzugsweise mindestens zwei Monaten, besonders bevorzugt von mindestens sechs Monaten, unverändert. Das Verfahren zur Überprüfung, ob eine hergestellte pastöse oder gelförmige Pigmentzubereitung zur Entmischung der Phasen neigt, indem sie die flüssige Phase absondert, ist unter Punkt I.4 im Kapitel über die "Beschreibung der verwendeten Mess- und Prüfmethoden" erläutert.

Die Pigmentzubereitung zeigt vorzugsweise nur eine geringe - insbesondere gar keine - Färbewirkung auf trockene und glatte Oberflächen, wie beispielsweise Metall, Glas, Keramik, Textilien oder Kunststoffe. Wie in Punkt I.3 im Kapitel über die "Beschreibung der verwendeten Mess- und Prüfmethoden" erläutert, beträgt die durchschnittliche Massenzunahme des Bolzens vorzugsweise maximal 0,15 g, bevorzugt maximal 0,12 g, ganz besonders bevorzugt maximal 0,07 g.

Das Verfahren zur Überprüfung, ob eine hergestellte pastöse oder gelförmige Pigmentzubereitung keine Färbewirkung auf trockene und glatte Oberflächen zeigt, erfolgt mit Hilfe eines Bolzens aus blankgezogenem V4A-Rundstahl (Werkstoff 1.4571) und ist unter Punkt 1.3 im Kapitel über die "Beschreibung der verwendeten Mess- und Prüfmethoden" erläutert. Auch auf trockener und glatter Haut zeigt die Pigmentzubereitung bei Wahl der geeigneten Verdickungsmittel und Hilfsmittel nur eine geringe oder vorzugsweise gar keine Färbewirkung. Die pastösen oder gelförmigen Pigmentzubereitungen können in die Hand genommen und durchgeknetet werden. Auch unter Druck zeigen sie keine Färbewirkung auf die trockenen Handinnenflächen. Irgendwelche anhaftenden Reste können von der entsprechenden Oberfläche einfach und in der Regel rückstandslos entfernt werden. Es wird vermutet, dass die innerhalb der pastösen oder gelförmigen Pigmentzubereitung wirkenden zwischenmolekularen Kräfte, die für die Ausbildung der Netzwerkstrukturen und/oder der Wasserstoff-Brückenbindungen in ihrem Inneren verantwortlich sind, stärker sind wie die Haftkräfte, die die Pigmentzubereitung zu glatten und trockenen Oberflächen wie Metall, Glas, Keramik, Textilien oder Kunststoffen auszubilden vermag. Die erfindungsgemäße Pigmentzubereitung ist also nicht nur staubfrei sondern sie kann auch sauber und problemlos gehandhabt werden. Lediglich auf feuchten Oberflächen kann es gegebenenfalls zu einem Abfärben kommen, weil sich die pastöse oder gelförmige Pigmentzubereitung aufzulösen beginnt.

Die Pigmentzubereitung enthält vorzugsweise zusätzlich noch mindestens einen Füllstoff in einer Menge von maximal 40 Gew.-%, bevorzugt von maximal 10 Gew.-%, bezogen auf die Pigmentzubereitung. Unter Füllstoffen sind farblose anorganische oder synthetische lamellare oder nicht lamellare Partikel zu verstehen, die die Pigmentzubereitung zusätzlich eindicken können und ihr Härte, Geschmeidigkeit, Mattheit oder Glanz verleihen sollen. Die Füllstoffe werden vorzugsweise unter Talk, Glimmer, Kieselsäuren, Kaolin, Nylonpulvern, Poly(β-alanin)pulvern, Polyethylenpulvern, Teflon, Lauroyllysin, Bornitrid, Bismutoxidchlorid, Polytetrafluorethylenpulvern, Polymethylmethacrylatpulvern, Polyurethanpulvern, Polystyrolpulvern, Polyesterpulvern, synthetischen Mikrohohlkugeln, Mirkoschwämmen, Mikrokugeln aus Silikonharz, den Oxiden von Zink und Titan, den Oxiden von Zirconium und Cer, gefälltem Calciumcarbonat oder Kreide, Magnesiumcarbonat, Magnesiumhydrogencarbonat, Hydroxylapatit, Mikrohohlkugeln aus Kieselsäuren, Mikrokapseln aus Glas oder aus Keramik, Metallseifen, die von organischen Carbonsäuren mit 8 bis 22 Kohlenstoffatomen und bevorzugt mit 12 bis 18 Kohlenstoffatomen abgeleitet sind, wie Zinkstearat, Magnesiumstearat, Lithiumstearat, Zinklaurat, Magnesiummyristat, den Verbindungen SiO₂/TiO₂/SiO₂, TiO₂/CeO₂/SiO₂ oder auch TiO₂/ZnO/Talk sowie den Polyethylenterephthalat/Polymethacrylat-Polymeren in Form von Plättchen ausgewählt.

Die Erfindung betrifft auch ein Verfahren zur Herstellung einer Pigmentzubereitung, dadurch gekennzeichnet, dass
- zu einer Dispersion von einem oder mehreren anorganischen und/oder organischen Pigmenten in einer Flüssigkeit, welche gegebenenfalls noch weitere Hilfsmittel und/oder Füllstoffe enthält und
- vor, während oder nach der Dispergierung mindestens ein Verdickungsmittel und/oder mindestens ein Verdickungsmittels in Kombination mit einer oder mehrerer Verbindungen, welche gemeinsam die Festigkeit erhöhen, zugesetzt wird und
- die pastöse oder gelförmige Pigmentzubereitung ausreichend lange homogenisiert wird und
- gegebenenfalls abschließend noch weitere Hilfsmittel zugesetzt werden.

Unter einer Dispersion wird gemäß DIN EN 862: 1995-10 ein System (disperses System) aus mehreren Phasen verstanden, von denen eine kontinuierlich (Dispersionmittel) - also im Sinne dieser Erfindung die Flüssigkeit beziehungsweise die Flüssigkeiten - und mindestens eine weitere fein verteilt ist (dispergiert Phase, Dispergens) - also im Sinne dieser Erfindung das oder die anorganischen und/oder organischen Pigmente. Da anorganische Pigmente in Flüssigkeiten unlöslich sind, ist der Begriff Suspension der Dispersion gleichzusetzen.

Der Zusatz mindestens eines Verdickungsmittels und/oder mindestens eines Verdickungsmittels in Kombination mit einer oder mehrerer Verbindungen, welche gemeinsam die Festigkeit erhöhen, erfolgt vorzugsweise bei Raumtemperatur oder oberhalb von Raumtemperatur.

Organische oder anorganische Verdickungsmittel werden vorzugsweise zugesetzt.

Als organische Verdickungsmittel werden vorzugsweise teil- oder vollhydrolysierte Polyvinylalkohole sowie deren Derivate oder andere Polyhydroxyverbindungen in Kombination mit Borverbindungen, bevorzugt *ortho*-Borsäure, *tetra*-Borsäure, *meta-*Borsäure oder deren Salze, oder in Kombination mit Salzen oder Komplexen von Elementen der IV. bis VI. Nebengruppe des Periodensystems, bevorzugt von Titan, Vanadium und Chrom, wie Titan-(III)-Salze oder Titan-(IV)-Triethanolamin, gegebenenfalls unter neutraler oder schwach alkalischer Einstellung des pH-Wertes eingesetzt.

Die Herstellung der erfindungsgemäßen Pigmentzubereitung kann entweder ausgehend vom trockenen festen Pigment oder auch ausgehend von einer flüssigen Phase - einer Dispersion - erfolgen.

Im ersten Fall müssen zunächst eines oder mehrere anorganische und/oder organische Pigmente in einer Flüssigkeit dispergiert werden, um die Agglomerate, wie sie beispielsweise in Pigmentpulvern oder Granulaten vorliegen, zu zerteilen. Die Dispersion von einem oder mehreren anorganischen und/oder organischen Pigmenten in einer Flüssigkeit ist vorzugsweise eine erneute Dispersion von zuvor agglomerierten Partikeln. Vorzugsweise wird als Flüssigkeit Wasser oder eine mit Wasser mischbare Flüssigkeit oder ein Gemisch aus mindestens zwei mit Wasser mischbaren Flüssigkeiten eingesetzt. Da der Einsatz von polaren Flüssigkeiten wie Wasser beispielsweise bei der Einfärbung von unpolaren Kunststoffen unvorteilhaft sein kann, können auch unpolare Flüssigkeiten oder unpolare Flüssigkeitsgemische, das heißt Mischungen von mindestens zwei unpolaren Flüssigkeiten, eingesetzt werden. Vorzugsweise wird als Flüssigkeit eine mit Wasser nicht-mischbare Flüssigkeit oder ein Gemisch aus mindestens zwei mit Wasser nicht-mischbaren Flüssigkeiten eingesetzt.

Die Verwendung von trockenen Pigmenten zur Herstellung der erfindungsgemäßen Pigmentzubereitung ist dann besonders vorteilhaft, wenn die Pigmente über einen trockenen Herstellungsprozess anfallen. So werden beispielsweise Titandioxid,- Chromoxid- und Rutilmischphasenpigmente über Glühprozesse bei hohen Temperaturen hergestellt. Auch die Herstellung von Eisenoxidrot-Pigmenten kann durch Entwässerung von Eisenoxidgelb oder durch Oxidation von Eisenoxidschwarz bei hohen Temperaturen erfolgen. Das Dispergieren der festen Pigmente in einer flüssigen Phase kann beispielsweise dadurch erfolgen, dass das Pigment zwischen zwei Flächen gerieben wird oder die Pigmentagglomerate durch Prall- und Scherkräfte zerlegt werden, die von schnell rotierenden Scheiben erzeugt werden. Auch die Kombination aus diesen beiden Arbeitsweisen ist möglich. Dem Fachmann sind alle Dispergiergeräte bekannt, die nach diesen Prinzipien arbeiten und für die Dispergierung von festen Pigmenten in einer flüssigen Phase geeignet sind. Es seien an dieser Stelle nur Walzwerke, Kugelmühlen, Rotor-Stator-Mühlen, Dissolver, Rührwerksmühlen und Kneter genannt. Die Rührwerkskugelmühlen können als Perlmühlen oder Sandmühlen mit Kugeln oder Sand als Mahlkörper, mit nur einem Mahltopf oder auch als so genannte Multikammer- oder Modularmühlen mit mehreren, meist hintereinander geschalteten Mahltöpfen, betrieben werden. Kneter im Sinne dieser Erfindung sind alle Gerät zum Mischen zähflüssiger, plastischer oder fester Stoffe zu zähen, plastischen, teigigen, pastösen oder gelförmigen Massen. Die Knetwerkzeuge eines Kneters bewegen sich so gegeneinander oder gegen feststehende Flächen, dass starkes Stauchen, Aufteilen und ein laminares Verschieben des Mahlgutes erfolgt. Die Kneter können entweder Schaufelkneter mit einem Doppelmulden-Knettrog mit z-förmigen Knetschaufeln oder Planetenkneter, bei denen der oder die Knetarme oder Knethaken planetenförmige Bewegungen ausführen oder Schneckenkneter mit einfachen oder doppelten Schneckenwellen oder Walzenkneter sein. Auch Rührwerke mit einem Misch- und Knetaufsatz können verwendet werden. Es ist nicht erfindungswesentlich, ob die Dispergiergeräte kontinuierlich oder diskontinuierlich arbeiten. Gegebenenfalls kann es auch vorteilhaft sein, die Dispergierung mit Hilfe von Ultraschall vorzunehmen.

Für den Fall dass von einer flüssigen Phase ausgegangen werden soll, kann die Herstellung der Pigmentzubereitung ausgehend von einer bereits vorhandenen Pigmentdispersion, wie sie beispielsweise unmittelbar nach der eigentlichen Pigmentsynthese oder nach der Filtration und Waschung des Pigmentes während dessen Aufarbeitung und vor dessen Trocknung anfällt, erfolgen. Die Dispersion von einem oder mehreren anorganischen und/oder organischen Pigmenten in einer Flüssigkeit ist vorzugsweise eine Dispersion, die aus dem Pigmentherstellungsprozess stammt.

Die Herstellung zahlreicher anorganischer Pigmente erfolgt in wässriger Phase. Aus diesem Grunde ist die Pigmentdispersion vorzugsweise eine wässrige Dispersion aus dem Pigmentherstellungsprozess. Bei der Verwendung einer Pigmentdispersion aus dem Pigmentherstellungsprozess kann - abhängig davon, an welcher Stelle des Pigmentherstellungprozesses die Pigmentdispersion abgegriffen wird - gegebenenfalls auf das Dispergieren der Pigmentpartikel verzichtet werden, wenn sie bereits ausreichend gut dispergiert sind. Trotzdem kann es vorteilhaft sein, die bereits oben erwähnten Dispergiergeräte einzusetzen, falls eine best mögliche Dispergierung gewünscht ist. Die Verwendung einer Pigmentdispersion aus dem Pigmentherstellungsprozess ist besonders vorteilhaft, da auf eine energie- und kostenintensive Trocknung des Pigments verzichtet werden kann.

Nachdem durch die Dispergierung eine ausreichend gute Verteilung des beziehungsweise der anorganischen und/oder organischen Pigmente in der Flüssigkeit gegeben ist, folgt das Verdicken beziehungsweise Gelieren, wodurch die Zähigkeit der Masse ansteigt. Vor, während oder nach der Dispergierung von einem oder mehreren anorganischen und/oder organischen Pigmenten in einer Flüssigkeit, erfolgt vorzugsweise die - gegebenenfalls portionsweise - Zugabe mindestens eines organischen oder anorganischen Verdickungsmittels und/oder mindestens eines Verdickungsmittels in Kombination mit einer oder mehrerer Verbindungen, welche gemeinsam die Festigkeit erhöhen, in einem Rührwerk, einem Mischer, einem Kneter oder einem Dissolver. Im Stand der Technik ist eine Vielzahl von Rührern und Rührwerken beschrieben. Der Fachmann wird ohne Zweifel den für seinen Anwendungszweck idealen Rührer beziehungsweise das ideale Rührwerk ausfindig machen können, die dazu geeignet sind, pastöse oder gelartige Massen durchzurühren, um ein organisches oder anorganisches Verdickungsmittel und/oder mindestens ein Verdickungsmittel in Kombination mit einer oder mehrerer Verbindungen, welche gemeinsam die Festigkeit erhöhen, ausreichend gut und homogen in die sich eindickende Pigmentdispersion einzurühren. Der Fachmann kennt auch eine Vielzahl von Mischern, die dazu geeignet sind, pastöse oder gelartige Massen durchzumischen, um ein organisches oder anorganisches Verdickungsmittel mindestens ein Verdickungsmittel in Kombination mit einer oder mehrerer Verbindungen, welche gemeinsam die Festigkeit erhöhen, ausreichend gut und homogen in die sich eindickende Pigmentdispersion einzumischen. Besonders bevorzugt sind Rührwerke mit einem Misch- und Knetaufsatz oder Kneter, die dazu geeignet sind, pastöse oder gelartige Massen durchzukneten, um ein organisches oder anorganisches Verdickungsmittel und/oder mindestens ein Verdickungsmittel in Kombination mit einer oder mehrerer Verbindungen, welche gemeinsam die Festigkeit erhöhen, ausreichend gut und homogen in die sich eindickende Pigmentdispersion einzukneten.

Vorzugsweise erfolgt nach der - gegebenenfalls portionsweisen - Zugabe mindestens eines organischen oder anorganischen Verdickungsmittels und/oder mindestens eines Verdickungsmittels in Kombination mit einer oder mehrerer Verbindungen, welche gemeinsam die Festigkeit erhöhen, noch das Homogenisieren der pastösen oder gelförmigen Pigmentzubereitung in einem Rührwerk, einem Mischer, einem Kneter oder einem Walzwerk gegebenenfalls auch unter vermindertem Druck. Durch das Arbeiten unter vermindertem Druck kann der Einschluss von Luftblasen vermieden werden. Grundsätzlich stören die möglicherweise eingeschlossenen Luftblasen nicht, wenn die erfindungsgemäße Pigmentzubereitung zum Einfärben von kalk- und/oder zementgebundenen Baustoffen, Asphalt, Farben, Lacken oder Papier eingesetzt wird. Bei der Einfärbung von Kunststoffen in Extrudern können eingeschlossene Luftblasen dagegen störend wirken. Für diesen Anwendungsfall ist es besonders vorteilhaft, die Luftblasen vorher zu entfernen. Wenn die erfindungsgemäße Pigmentzubereitung von pastöser Konstistenz ist, steigen die eingeschlossenen Luftblasen im Laufe einiger Stunden oder Tage nach der Herstellung oftmals ohnehin an die Oberfläche. Die Pigmentzubereitung entgast sich also von selbst.

Der Zusatz von Hilfsmitteln oder Füllstoffen kann grundsätzlich zu jedem Zeitpunkt des Herstellungsprozesses erfolgen. Vorzugsweise werden sie zu Beginn des Herstellungsprozesses, das heißt vor oder während der Dispergierung der anorganischen und/oder organischen Pigmente in der flüssigen Phase zugesetzt. Vorzugsweise können sie auch am Ende des Herstellungsprozesses zugesetzt werden, indem sie dann noch in die pastöse oder gelförmige Pigmentzubereitung eingearbeitet werden.

Die Erfindung umfasst auch ein Verfahren zum Einfärben von kalk- und/oder zementgebundenen Baustoffen, Asphalt, Farben, Lacken, Papier oder Kunststoffen, welches dadurch gekennzeichnet ist, dass die erfindungsgemäße Pigmentzubereitung wird mit kalk- und/oder zementgebundenen Baustoffen, Asphalt, Farben, Lacken, Papier oder Kunststoffen vermischt wird.

Vorzugsweise wird die Pigmentzubereitung vor oder während der Zugabe zu den kalk- und/oder zementgebundenen Baustoffen, Asphalt, Farben, Lacken, Papier oder Kunststoffen beziehungsweise während des Mischvorganges mit den kalk- und/oder zementgebundenen Baustoffen, Asphalt, Farben, Lacken, Papier oder Kunststoffen verflüssigt, wobei die Verflüssigung durch
- Lösen in einer oder mehreren Flüssigkeiten und/oder
- Zugabe einer Säure oder Lauge durch Änderung des pH-Wertes und/oder
- Chemische Reaktion, bevorzugt von Redox-Reaktionen, oder enzymatische Reaktion und/oder
- Zufuhr von Wärme, mechanischer Energie und/oder Ultraschall
erfolgt.

Die Wiederverflüssigung der erfindungsgemäßen Pigmentzubereitungen ist also auf verschiedene Arten möglich. Die pastösen oder gelförmigen Pigmentzubereitungen, die ausgehend von Wasser unter Zusatz von teil- oder vollhydrolysierten Polyvinylalkoholen in Kombination mit *ortho*-Borsäure, *tetra*-Borsäure, *meta*-Borsäure oder deren Salze hergestellt werden, zeigen eine ganz hervorragende Wiederverflüssigung beim Einrühren in Wasser. Bei fachmännischer Ausführung lösen sie sich beim Einrühren in Wasser innerhalb kurzer Zeit, meist schon innerhalb von 60 s, vollständig auf.

Die verdickende Wirkung beziehungsweise die Gelierungseigenschaften zahlreicher Verdickungsmittel ist abhängig vom pH-Wert. Daher können die erfindungsgemäßen Pigmentzubereitungen auch durch Zusatz von Säure oder Lauge, wodurch sich der pH-Wert verändert, wieder verflüssigt werden. Hohe Säurekonzentrationen und Temperaturen vermögen beispielsweise Algin und Alginatester quantitativ zu decarboxylieren.

Die Wiederverflüssigung der erfindungsgemäßen Pigmentzubereitungen kann durch chemische Reaktion, bevorzugt von Redox-Reaktionen, oder enzymatische Reaktion erfolgen. Es ist bekannt, dass durch Einwirkung von Perjodat 1,2-Glykole oxidativ gespalten werden können. Bei vielen Polysacchariden findet diese Glykolspaltung anfangs unter Erhaltung der Makromoleküle statt. Durch Einwirkung von Kaliumperjodat wird nun die für die Komplexbildung mit Boraten erforderliche 1,2-cis-Diolgruppierung oxidativ aufgespalten. Tatsächlich tritt wenige Minuten nach Zugabe von Kaliumperjodat zu einer Carubin-Lösung durch Zusatz von Borax keine Gelierung mehr ein, obwohl die Viskosität durch oxidativen Abbau erst sehr wenig abgenommen hat. Das Carubin ist also nicht mehr zur Gelbildung fähig. Ein bereits hergestelltes Carubin-Borax-Gel kann durch Verreiben mit Kaliumperjodat ebenfalls wieder verflüssigt werden. Der gleiche Wiederverflüssigungs-Effekt tritt ein, wenn festes Natriumperjodat lediglich auf ein Carubin-Borax-Gel gestreut wird oder ein Carubin-Borax-Gel mit einer Perjodat-Lösung besprüht wird. Sowohl Oxidationsmittel, welche direkt wirken wie Halogene oder Perjodat, als auch Redox-Systeme wie Polyphenole, Ascorbinsäure oder Thiolverbindungen bauen Algin ab. Zur Herstellung niedrigviskoser Alginate wird Wasserstoffperoxid verwendet. Xanthan wird von starken Oxidationsmitteln wie Hypochlorid oder Persulfat besonders bei hohen Temperaturen abgebaut. Auch bakterielle Alginsäuredepolymerasen sind beschrieben. Zahlreiche andere Verdickungsmittel - vor allem wenn sie natürlichen Ursprungs sind - können mit Hilfe von Enzymen abgebaut werden, wodurch sie ihre Wirksamkeit verlieren.

Wie bereits erwähnt, können zahlreiche Gele durch Zufuhr von Wärme wieder verflüssigt werden. Sie sind thermoreversibel, das heißt, man ist in der Lage, Gele herzustellen, die bei erhöhter Temperatur flüssig werden und sich beim Abkühlen wieder verfestigen. Die niedrigveresterten Pektine mit einem Veresterungsgrad von mindestens 20%, die zur Gelbildung Calcium-Ionen benötigen, sind als Calcium-Pektinat-Gele hitzereversibel. Gellan bildet nach Erhitzen und Abkühlen ebenfalls thermoreversible Gele, wobei die Anwesenheit ein- und zweiwertiger Kationen notwendig ist. Auch Xanthan bildet mit Carubin starke, gummiartige und thermoreversible Gele. Mehrwertige Phenole und verwandte Verbindungen wie Resorcin, Brenzkatechin, Phloroglucin, Gallussäure, Salicylanilid und 2,4-Dihydroxybenzoesäure können mit Polyvinylalkoholen relativ lockere Komplexe (Assoziate) bilden. Diese Assoziate sind thermisch reversibel.

Anstelle von Wärmezufuhr kann die Wiederverflüssigung der erfindungsgemäßen Pigmentzubreitungen auch durch Zufuhr von mechanischer Energie, wie zum Beispiel Rühren erfolgen. Die Zufuhr von mechanischer Energie kann dann besonders vorteilhaft sein, wenn, Thixotropie-Effekte bei der erfindungsgemäßen Pigmentzubereitungen ausgenützt werden können. In Einzelfällen kann die erfindungsgemäße Pigmentzubereitung auch durch Einwirkung von Ultraschall wieder verflüssigt werden.

Die Pigmentzubereitung wird vorzugsweise mit den kalk- und/oder zementgebundenen Baustoffen, Asphalt, Farben, Lacken, Papier oder Kunststoffen in einer Menge von 0,01 bis 15 Gew.-%, bevorzugt von 0,1 bis 10 Gew.-%, bezogen auf die gesamte Mischung, vermischt.

Die erfindungsgemäße Pigmentzubereitung weist eine Reihe von Vorteilen auf. Bei der Herstellung der Pigmentzubereitung wird von der Flüssigphase ausgegangen, so dass energieaufwändige Trocknungsschritte entfallen können. Dies ist natürlich dann besonders vorteilhaft, wenn bereits die Pigmentherstellung selbst in der Flüssigphase erfolgt. Die erfindungsgemäße Pigmentzubereitung ist nicht nur staubfrei sondern sie kann auch sauber und problemlos gehandhabt werden. Außerdem ist sie in den verschiedenen Anwendungsmedien hervorragend dispergierbar. Aufgrund der pastösen oder gelförmigen Konsistenz zeigt die erfindungsgemäße Pigmentzubereitung keine Sedimentation. Es kommt zu keiner Entmischung der Phasen und sie ist über einen langen Zeitraum lagerstabil und kann jederzeit eingesetzt werden. Sie ist also stets gebrauchsfertig. Die erfindungsgemäße Pigmentzubereitung zeigt darüber hinaus keine Färbewirkung auf trockene und glatte Oberflächen. Vermutlich sind die innerhalb einer solchen Pigmentzubereitung wirkenden zwischenmolekularen Kräfte, die für die Ausbildung der Netzwerkstrukturen und/oder der Wasserstoff-Brückenbindungen in ihrem Inneren verantwortlich sind, stärker wie die Haftkräfte, die die Pigmentzubereitung zu glatten und trockenen Oberflächen wie Metall, Glas, Keramik, Textilien oder Kunststoffen auszubilden vermag.

Die pastösen Pigmentzubereitungen, die auf der Basis von teil- oder vollhydrolysierten Polyvinylalkoholen sowie deren Derivate oder anderer Polyhydroxyverbindungen als Verdickungsmittel in Kombination mit Borverbindungen wie *ortho*-Borsäure, *tetra*-Borsäure, *meta*-Borsäure oder deren Salze, oder in Kombination mit Salzen oder Komplexen von Elementen der IV. bis VI. Nebengruppe des Periodensystems, bevorzugt von Titan, Vanadium und Chrom, wie Titan-(III)-Salze oder Titan-(IV)-Triethanolamin, gegebenenfalls unter neutraler oder schwach alkalischer Einstellung des pH-Wertes hergestellt werden, zeichnen sich durch weitere anwendungstechnische Vorteile aus. Bei Wahl der geeigneten Kettenlänge, der Konzentration und des Verseifungsgrades des Polyvinylalkohols sowie der richtigen Menge der Borverbindung beziehungsweise des Komplexbildners zeigen diese Pigmentzubereitungen nur eine geringe oder sogar gar keine Färbewirkung auf trockene und glatte Haut. Die Pigmentzubereitungen können in die Hand genommen und durchgeknetet werden. Auch unter Druck zeigen sie keine Färbewirkung auf die trockenen Handinnenflächen. Die extrem starken Haftkräfte können auch durch eine andere Erscheinung demonstriert werden: Eine in kleine Stücke zerrissene Pigmentzubereitung, wächst nach kurzer Zeit wieder zu einer vollständig homogenen Masse zusammen. Des weiteren zeigen diese Pigmentzubereitungen eine ganz hervorragende Wiederverflüssigung beim Einrühren in Wasser. Bei fachmännischer Ausführung lösen sie sich beim Einrühren in Wasser innerhalb kurzer Zeit, meist schon innerhalb von 60 s, vollständig auf.

In einer bevorzugten Ausführungsform ist die erfindungsgemäße Pigmentzubereitung gelförmig und damit formbeständig, so dass bei einer Beschädigung des Gebindes kein Produktaustritt und somit keine Kontamination der Umwelt oder der Mitarbeiter erfolgt.

Die erfindungsgemäßen pastösen oder gelförmigen Pigmentzubereitungen lassen sich problemlos in Klein- und Großgebinde abfüllen. Zu den Kleingebinden zählen zum Beispiel Tuben, Spritzen, Kartuschen, Schlauchbeutel, Siegelrandbeutel sowie sämtliche anderen, dem Fachmann bekannten Verpackungen für pastöse oder gelförmige Produkte, wie beispielsweise Spender oder ähnliches. Sie können aber auch in Großgebinde, wie Fässer, Säcke oder sogar Bulk Bags abgefüllt werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne dass dadurch eine Einschränkung der Erfindung bewirkt werden soll.

### I. Beschreibung der verwendeten Mess- und Prüfmethoden

### I.1 Baustoff-Farbtest

Die Prüfung der Dispergierbarkeit in Baustoffen erfolgte in Zementmörtel über die visuelle Beurteilung von mit Weißzement hergestellten Steinen bei folgenden Daten:
Zement-Quarzsand-Verhältnis 1:4, Wasser-Zement-Wert 0,35, Pigmentierungshöhe 2,4% bezogen auf Zement, verwendeter Mischer von RK Toni Technik, Berlin, mit 51-Mischschüssel, Bauform 1551, Drehzahl 140 U/min, Ansatz: 1200 g Quarzsand 0,1 bis 1 mm, 600 g Quarzsand 1 bis 2 mm, 200 g Kalksteinmehl (< 5% Siebrückstand auf 90 µm-Sieb), 500 g Weißzement. Die Quarzsandfraktionen und das Kalksteinmehl werden zusammen im Mischbehälter vorgelegt. Anschließend wird 10 s vorgemischt (Mischer Stufe 1: langsam). Zu dieser Mischung wird nun die in Wassser gelöste Pigmentzubereitung als Suspension beziehungsweise bei den Vergleichsbeispielen das in Wasser suspendierte Pigment oder der in Wasser suspendierte Filterkuchen gegeben, wobei darauf zu achten ist, dass die Gesamtmenge an Wasser 175 g beträgt und dass die Wasser-/Pigment-Suspension in die Mitte der Mischung eingebracht wird. Nach dem Versickern wird der Zement zugesetzt und gemischt (Mischer Stufe 1: langsam). Nach 100 s Mischzeit werden drei Proben zu je 600 g entnommen und daraus drei Probekörper (10 x 10 x 2,5 cm) unter Druck hergestellt (Presskraft 114 kN für 2 Sekunden). Härtung der Probekörper zu den fertigen Steinen: 24 Stunden bei 30°C und 95 % relative Luftfeuchte mit anschließendem Trocknen von 4 Stunden bei 60°C. Die erhaltenen Steine wurden visuell begutachtet.

### I.2 Bestimmung der Dispergierbarkeit in Dispersionsfarben

Die Dispergierbarkeit von Bunt- und Schwarzpigmenten in Dispersionsfarben wird mittels Dissolver bestimmt. Als Prüfmedium wird eine Dispersionsfarbe auf Basis einer PVA-Dispersion (Vinylacetat/Versaticsäurevinylester) mit einer Pigmentvolumenkonzentration von 55% (Pigment/Füllstoff-Verhältnis 40/60) eingesetzt. Bei der Einarbeitung des Pigmentes werden 180 g weiße Dispersionsfarbe vorgelegt, dann 6,0 g des zu prüfenden Bunt- oder Schwarzpigmentes - beziehungsweise eine entsprechend ihres Pigmentgehaltes umgerechnete Menge der pastösen oder gelförmigen Pigmentzubereitung, so dass auch in diesen Fällen 6,0 g Pigment vorliegen - unter Rühren zugesetzt (Titandioxidpigment/Buntpigment-Gewichtsverhältnis beziehungsweise Titandioxidpigment/Schwarzpigment-Gewichtsverhältnis = 5:1; als Titandixoidpigment kann beispielsweise Tronox^{®} R-KB-2, ein Handelsprodukt der Tronox Inc., eingesetzt werden). Mit einer Dissolverscheibe (Durchmesser 4 cm) werden folgende Dispergierbedingungen eingestellt:

| | |
|---|---|
| 10 min | 1000 U/min (2,1 m/s) und dann |
| 20 min | 2000 U/min (4,2 m/s) und dann |
| 10 mm | 4500 U/min (9,4 m/s) |

Nach den einzelnen Dispergierzeiten wird jeweils eine geringe Menge Farbe entnommen und daraus ein Aufzug mit 90 µm Nassfilmschichtdicke (Spalthöhe der Abziehrakel) angefertigt und bei Raumtemperatur getrocknet. Nach der Trocknung werden die Aufzüge (Anstrichfilme) mit einem scharfkantigen Gegenstand abgezogen, wodurch die nichtdispergierten Pigmentteilchen der Bunt- oder Schwarzpigmente an der Oberfläche als Punkte beziehungsweise Streifen (Stippen) erscheinen. Die auf die Pigmente anzuwendende Dispergierenergie wird durch die Anzahl der auf den einzelnen Abzügen vorhandenen Stippen mit einer Bewertungsskala von Stufe 1 bis 5 beurteilt:

| | |
|---|---|
| Stufe 1: | keine Stippen |
| Stufe 2: | einige Stippen |
| Stufe 3: | mäßige Stippen |
| Stufe 4: | viele Stippen |
| Stufe 5: | sehr viele Stippen |

Eine gute Dispergierbarkeit ist nur bei den Bewertungsstufen 1 und 2 gegeben, ab Stufe 3 ist die Bewertung für die aufgewendete Dispergierenergie unzureichend. Je früher die Bewertungsstufen 1 oder 2 erreicht werden, das heißt je niedriger die angewendete Dispergierenergie ist, desto besser ist das untersuchte Pigment oder die Pigmentzubereitung dispergierbar.

### I.3 Prüfung der Färbewirkung auf trockene und glatte Oberflächen

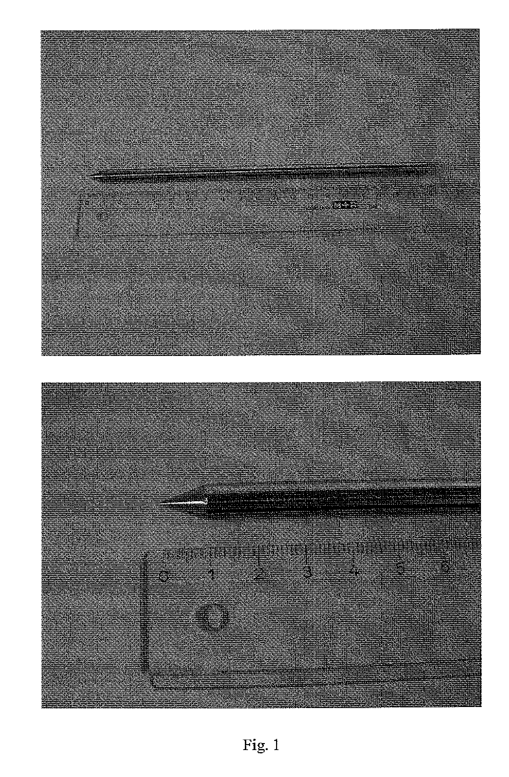

Die Prüfung der Färbewirkung auf trockene und glatte Oberflächen erfolgt mit Hilfe eines Bolzens aus blankgezogenem V4A-Rundstahl (Werkstoff 1.4571). Der Bolzen besitzt einen Durchmesser von 8 mm und ist 200 mm lang. Ein Ende ist auf einer Länge von 10 mm zu einer Spitze gearbeitet wie in Figur 1 dargestellt. Die Pigmentzubereitung wird unmittelbar nach ihrer Herstellung in ein geeignetes Gebinde, welches luftdicht verschlossen werden kann und vom Volumen her nicht wesentlich größer wie die Pigmentzubereitung ist, abgefüllt. Ein solches Gebinde kann beispielsweise eine luftdicht verschließbare Polyethylenflasche mit ausreichend großer Öffnung oder ein luftdicht verschließbarer Kunststoffeimer sein. Beim Befüllen ist darauf zu achten, dass die Füllhöhe in dem entsprechenden Gebinde 50 mm beträgt. Erst nachdem sich die Pigmentzubereitung auf Raumtemperatur (20 bis 22 °C) abgekühlt hat, wird das entsprechende Gebinde luftdicht verschlossen und bei Raumtemperatur gelagert. Nach einer 24stündigen Lagerung erfolgt die Prüfung der Färbewirkung der pastösen oder gelförmigen Pigmentzubereitung auf trockene und glatte Oberflächen. Dazu wird der trockene und saubere Bolzen mit der Spitze voran schnell (ruckartig) in die pastöse oder gelförmige Pigmentzubereitung gedrückt, bis der Bolzen auf dem Boden des Gebindes anschlägt. Dann wird er sofort wieder schnell (ruckartig) aus der pastösen oder gelförmigen Pigmentzubereitung herausgezogen. Durch eine Differenzwägung vor und nach dem Eintauchen wird die Masse der am Bolzen anhaftenden pastösen oder gelförmigen Pigmentzubereitung bestimmt. Der Bolzen wird gereinigt und das Verfahren insgesamt dreimal durchgeführt, wobei der Bolzen jedes Mal an einer anderen Stelle in die pastöse oder gelförmige Pigmentzubereitung eingetaucht wird. Aus den drei Wägungen wird nun die durchschnittliche Massenzunahme des Bolzens berechnet. Wenn die durchschnittliche Massenzunahme des Bolzens maximal 0,07 g, bevorzugt maximal 0,04 g beträgt, so zeigt die Pigmentzubereitung keine Färbewirkung auf trockene und glatte Oberflächen in Sinne dieser Erfindung. Um zu demonstrieren, dass eine durchschnittliche Massenzunahme von maximal 0,07 g, bevorzugt von maximal 0,04 g, sehr wenig ist, soll der Vergleich mit einer Flüssigfarbe herangezogen werden. Bayferrox^{®} 350 flüssig (Handelsprodukt der Lanxess Deutschland GmbH) ist eine wässrige Suspension eines Eisenoxidschwarz-Pigmentes zum Einfärben von Baustoffen mit einem Pigmentgehalt von 50 bis 55%. Die zum Vergleich untersuchte Probe von Bayferrox^{®} 350 flüssig wies einen Pigmentgehalt von 53,9% und eine Viskosität von 1260 mPas auf (Viskosität nach Brookfield, gemessen bei 20 °C mit Spindel Nr. 4 bei 100 U/min). Wird an einer solchen Suspension die Prüfung der Färbewirkung auf trockene und glatte Oberflächen nach dem beschriebenen Verfahren mit Hilfe des Bolzens durchgeführt, so beträgt die durchschnittliche Massenzunahme des Bolzens durch die daran anhaftende Pigmentsuspension 0,73 g.

### I.4 Prüfung auf Entmischung der Phasen

Unmittelbar nach ihrer Herstellung wird die Pigmentzubereitung in ein geeignetes Gebinde, welches luftdicht verschlossen werden kann und vom Volumen her nicht wesentlich größer wie die Pigmentzubereitung ist, abgefüllt. Ein solches Gebinde kann beispielsweise eine luftdicht verschließbare Polyethylenflasche mit ausreichend großer Öffnung oder ein luftdicht verschließbarer Kunststoffeimer sein. Erst nachdem sich die Pigmentzubereitung auf Raumtemperatur (20 bis 22 °C) abgekühlt hat, wird das entsprechende Gebinde luftdicht verschlossen und bei Raumtemperatur gelagert. Nach einem Zeitraum von mindestens zwei Monaten, bevorzugt von mindestens sechs Monaten, wird kontrolliert, ob eine Entmischung der Phasen eingetreten ist, das heißt, ob sich auf der Pigmentzubereitung eine überstehende flüssige Phase gebildet hat. Eventuell ist im Gebinde - vor allem bei einer falsch gewählten Dimension - ein wenig Flüssigkeit an der Wand oder dem Deckel kondensiert. Eine solche Kondensflüssigkeit darf nicht berücksichtigt werden.

### I.5 Bestimmung der Dispergierbarkeit in Wasser

In einem 150 ml Bechergals (breite Form) werden 87,5 g Wasser vorgelegt. Unter Rühren mit einem Turbinenrührer (Durchmesser 28 mm) bei einer Drehzahl von 600 U/min wird die pastöse oder gelförmige Pigmentzubereitung in einem Stück ins Wasser gegeben. Die Menge der zugegebenen pastösen oder gelförmigen Pigmentzubereitung wird stets so gewählt, dass sie 6 g Pigment enthält. Nach einer bestimmten Zeit wird der Rührer abgestellt, die Pigmentsuspension über ein Sieb mit einer Maschenweite von 250 µm geschüttet und das Sieb kurz mit einem Brausestahl gereinigt. Wenn auf dem Sieb keine Rückstande der Pigmentzubereitung mehr vorhanden sind, das heißt wenn alle Partikel der Pigmentzubereitung kleiner als 250 µm sind, dann wird die pastöse oder gelförmige Pigmentzubereitung als vollständig gelöst angesehen.

### II. Beispiel 1

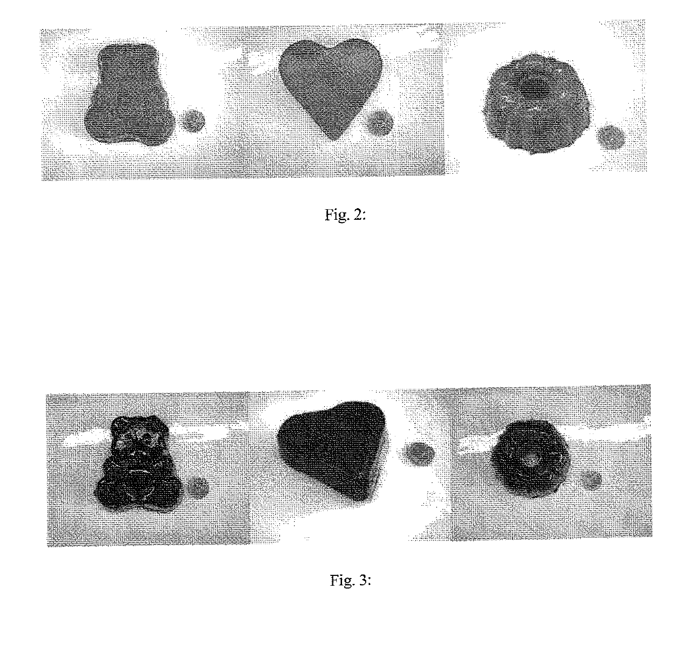

Aus 735 g Chromoxid grün GN (Handelsprodukt der Lanxess Deutschland GmbH) und 735 g Wasser wurden unter Zusatz von 1,52 g einer wässrigen Lösung von NatriumPolyacrylat mit 40% Wirkstoffgehalt als Netz- und Dispergieradditiv eine Dispersion mit 50% Pigmentgehalt hergestellt. Dann wurden drei Tropfen Preventol^{®} D6 (Handelsprodukt der Lanxess Deutschland GmbH) als Konservierungsmittel und 38,7 g Gelatine aus Schweinehaut (240 bis 270 g Bloom) als Verdickungsmittel zugesetzt und die Dispersion 30 Minuten bei 45 °C gerührt. Die noch warme Dispersion wurde in verschiedene Gebinde, unter anderem in Backformen für Kinder, gegossen, auf Raumtemperatur abgekühlt und luftdicht verschlossen. Nach circa zwei Stunden war bereits eine merkliche Gelbildung eingetreten. Nach 24 Stunden konnten die Backformen gestürzt werden. Die erhaltene Pigmentzubereitung war von gelförmiger Konsistenz. Die Formstabilität, wird durch Figur 2 demonstriert.

Die hergestellte gelförmige Pigmentzubereitung zeigte keine Färbewirkung auf trockene und glatte Oberflächen gemäß dem beschriebenen Prüfverfahren, da die durchschnittliche Massenzunahme des Bolzens 0,006 g betrug. Außerdem zeigte sie über einen Zeitraum von mehreren Monaten keine Entmischung der Phasen.

Die hergestellte gelförmige Pigmentzubereitung ließ sich bereits durch schwaches Erwärmen auf 35 °C wieder verflüssigen, beim erneuten Abkühlen trat wieder die Gelbildung ein.

Abtestung im Baustoffen: 24 g der gelförmigen Pigmentzubereitung wurden unter Erwärmen wieder verflüssigt und in 163 g erwärmtem Wasser gelöst. Die erhaltene Suspension bildete beim Abkühlen auf Raumtemperatur kein Gel mehr und wurde für den beschriebenen Baustoff-Farbtest verwendet. Es resultierten homogen grün eingefärbte Steine.

### III. Beispiel 2 (Vergleichsbeispiel zu Beispiel 1)

Abtestung im Baustoffen: Zum Vergleich wurden auch 12 g des für die Herstellung der gelförmigen Pigmentzubereitung aus Beispiel 1 eingesetzten Chromoxid grün GN-Pulvers unter Rühren in 175 g Wasser dispergiert und für den beschriebenen Baustoff-Farbtest eingesetzt. Es wurden ebenfalls homogen grün eingefärbte Steine erhalten. Ein Unterschied zu den Steinen, die mit der gelförmigen Pigmentzubereitung aus Beispiel 1 eingefärbt worden waren, konnte nicht festgestellt werden.

### IV. Beispiel 3

550 g Bayferrox^{®} 330 (Eisenoxidschwarz-Pigment, Handelsprodukt der Lanxess Deutschland GmbH) wurden in 450 g Wasser dispergiert. Zu dieser Dispersion wurden 6,8 g Kappa-Carrageen als Verdickungsmittel und drei Tropfen Preventol^{®} D6 als Konservierungsmittel zugesetzt und die Dispersion 30 Minuten bei 40 °C gerührt. Die noch warme Dispersion wurde in verschiedene Gebinde, unter anderem in Backformen für Kinder, gegossen, auf Raumtemperatur abgekühlt und luftdicht verschlossen. Nach circa einer Stunde war bereits eine merkliche Gelbildung eingetreten. Nach 24 Stunden konnten die Backformen gestürzt werden. Die erhaltene Pigmentzubereitung war von gelförmiger Konsistenz. Die Formstabilität, wird durch Figur 3 demonstriert.

Die hergestellte gelförmige Pigmentzubereitung zeigte keine Färbewirkung auf trockene und glatte Oberflächen gemäß dem beschriebenen Prüfverfahren, da die durchschnittliche Massenzunahme des Bolzens 0,004 g betrug. Außerdem zeigte sie über einen Zeitraum von mehreren Monaten keine Entmischung der Phasen.

Die hergestellte gelförmige Pigmentzubereitung ließ sich durch Erwärmen auf 55 °C wieder verflüssigen, beim erneuten Abkühlen trat wieder die Gelbildung ein.

Abtestung im Baustoffen: 24 g der gelförmigen Pigmentzubereitung wurden unter Erwärmen wieder verflüssigt und in 163 g erwärmtem Wasser gelöst. Die erhaltene Suspension bildete beim Abkühlen auf Raumtemperatur kein Gel mehr und wurde für den beschriebenen Baustoff-Farbtest verwendet. Es resultierten homogen schwarz eingefärbte Steine.

### V. Beispiel 4 (Verlgeichsbeispiel zu Beispiel 3)

Abtestung im Baustoffen: Zum Vergleich wurden auch 12 g des für die Herstellung der gelförmigen Pigmentzubereitung aus Beispiel 3 eingesetzten Bayferrox^{®} 330-Pulvers unter Rühren in 175 g Wasser dispergiert und für den beschriebenen Baustoff-Farbtest eingesetzt. Es wurden ebenfalls homogen schwarz eingefärbte Steine erhalten. Ein Unterschied zu den Steinen, die mit der gelförmigen Pigmentzubereitung aus Beispiel 3 eingefärbt worden waren, konnte nicht festgestellt werden.

### VI. Beispiel 5

550 g Bayferrox^{®} 330 wurden in 450 g Wasser dispergiert. Zu dieser Dispersion wurden 6,8 g einer 1:1-Mischung aus Kappa-Carrageen und Iota-Carrageen als Verdickungsmittel sowie drei Tropfen Preventol^{®} D6 als Konservierungsmittel zugesetzt und die Dispersion 30 Minuten bei 40 °C gerührt. Die noch warme Dispersion wurde in verschiedene Gebinde, unter anderem in die Bärchen-Backform aus den Beispielen 1 und 3 gegossen, auf Raumtemperatur abgekühlt und luftdicht verschlossen. Nach circa zwei Stunden war bereits eine merkliche Gelbildung eingetreten. Nach 24 Stunden konnte die Backform gestürzt werden. Die erhaltene Pigmentzubereitung war von gelförmiger Konsistenz und formstabil.

Die hergestellte gelförmige Pigmentzubereitung war weicher wie die aus Beispiel 3. Sie zeigte keine Färbewirkung auf trockene und glatte Oberflächen gemäß dem beschriebenen Prüfverfahren, da die durchschnittliche Massenzunahme des Bolzens 0,013 g betrug. Außerdem zeigte sie über einen Zeitraum von mehreren Monaten keine Entmischung der Phasen.

Die hergestellte gelförmige Pigmentzubereitung ließ sich durch Erwärmen auf 45 °C wieder verflüssigen, beim erneuten Abkühlen trat wieder die Gelbildung ein.

### VII. Beispiel 6

750 g Chromoxid grün GN wurden in einer Mischung aus 500 g Wasser und 150 g einer 15%igen Mowiol^{®} 18-88-Lösung als Verdickungsmittel dispergiert (Mowiole^{®} sind Polyvinylalkohole und Handelsprodukte der Kuraray Specialities Europe GmbH). Die Dispersion wurde in einen IKA^{®}-Horizontalkneter HKD 2,5 mit DLTPLEX-Schaufeln überführt und während des Knetens über einen Zeitraum von ca. 5 Minuten 40 g einer bei Raumtemperatur gesättigten Kalium-Tetraborat Pentahydrat-Lösung, als Verbindung, welche in Kombination mit einem Verdickungsmittel gemeinsam die Festigkeit erhöht, zugesetzt. Dann wurde noch 30 Minuten weiter geknetet und homogenisiert. Es entstand eine Pigmentzubereitung von pastöser Konsistenz.

Die hergestellte pastöse Pigmentzubereitung zeigte keine Färbewirkung auf trockene und glatte Oberflächen gemäß dem beschriebenen Prüfverfahren, da die durchschnittliche Massenzunahme des Bolzens 0,00 g betrug. Außerdem zeigte sie über einen Zeitraum von mehreren Monaten keine Entmischung der Phasen. Bei der Bestimmung der Dispergierbarkeit in Wasser gemäß dem beschriebenen Verfahren löste sie sich innerhalb von 60 s vollständig auf.

Abtestung im Baustoffen: 24 g der pastösen Pigmentzubereitung wurden unter Rühren in 163 g Wasser gelöst und die erhaltene Suspension für den beschriebenen Baustoff-Farbtest verwendet. Es resultierten homogen grün eingefärbte Steine.

Abtestung in Dispersionfarbe: 12 g der hergestellten pastösen Pigmentzubereitung wurden für die beschriebene Bestimmung der Dispergierbarkeit in Dispersionsfarben eingesetzt. Das Ergebnis:

| | |
|---|---|
| 10 min bei 1000 U/min | Bewertungsstufe: 1 |
| 20 min bei 2000 U/min | Bewertungsstufe: 1 |
| 10 min bei 4500 U/min | Bewertungsstufe: 1 |

Bereits nach 10 min bei 1000 U/min war die Bewertungsstufe 1 erreicht. Die pastöse Pigmentzubereitung zeigte also bereits bei der geringsten Dispergierenergie eine sehr gute Dispergierbarkeit.

### VIII. Beispiel 7 (Vergleichsbeispiel zum Beispiel 6)

Abtestung im Baustoffen: Zum Vergleich wurden auch 12 g des für die Herstellung der pastösen Pigmentzubereitung aus Beispiel 6 eingesetzten Chromoxid grün GN-Pulvers unter Rühren in 175 g Wasser dispergiert und für den beschriebenen Baustoff-Farbtest eingesetzt. Es wurden ebenfalls homogen grün eingefärbte Steine erhalten. Ein Unterschied zu den Steinen, die mit der pastösen Pigmentzubereitung aus Beispiel 6 eingefärbt worden waren, konnte nicht festgestellt werden.

Abtestung in Dispersionfarbe: Zum Vergleich wurden 6 g des für die Herstellung der pastösen Pigmentzubereitung aus Beispiel 6 eingesetzten Chromoxid grün GN-Pulvers für die beschriebene Bestimmung der Dispergierbarkeit in Dispersionsfarben eingesetzt. Das Ergebnis:

| | |
|---|---|
| 10 min bei 1000 U/min | Bewertungsstufe: 5 |
| 20 min bei 2000 U/min | Bewertungsstufe: 4 |
| 10 min bei 45 00 U/min | Bewertungsstufe: 2 |

Bei dem eingesetzten Chromoxid grün GN-Pulver, mussten sehr intensive Dispergierbedingungen gewählt werden, um eine gute Dispergierung (Bewertungsstufe 2) zu erreichen. Das eingesetzte Chromoxid grün GN-Pulver war also deutlich schlechter dispergierbar wie die pastöse Pigmentzubereitung aus Beispiel 6.

### IX. Beispiel 8

Die pastöse Pigmentzubereitung aus Beispiel 6 wurde für 60 Stunden bei -11 °C in einem luftdicht verschließbaren Behälter eingefroren. Dann wurde sie wieder auf Raumtemperatur aufgetaut. Die wieder aufgetaute pastöse Pigmentzubereitung zeigte keine Unterschiede zu der ursprünglichen Pigmentzubereitung. Es hatte sich kein Wasser ausgeschieden. Bei der Bestimmung der Dispergierbarkeit in Wasser gemäß dem beschriebenen Verfahren, löste sie sich noch immer innerhalb von 60 s vollständig auf.

Abtestung im Baustoffen: 24 g der wieder aufgetauten pastösen Pigmentzubereitung wurden unter Rühren in 163 g Wasser gelöst und die erhaltene Suspension für den beschriebenen Baustoff-Farbtest verwendet. Es resultierten wieder homogen grün eingefärbte Steine. Ein Unterschied zu den Steinen aus Beispiel 6 und Beispiel 7 konnte nicht festgestellt werden.

Die hergestellte pastöse Pigmentzubereitung hatte sich also durch das Einfrieren und Auftauen nicht verschlechtert.

### X. Beispiel 9

1000 g Bayferrox^{®} 130M (Eisenoxidrot-Pigment, Handelsprodukt der Lanxess Deutschland CrtnbH) wurden in einer Mischung aus 516 g Wasser, 67 g einer 15%igen Mowiol^{®} 18-88-Lösung und 83 g einer 8%igen Mowiol^{®} 40-88-Lösung, jeweils als Verdickungsmittel, dispergiert. Die Dispersion wurde in einen IKA^{®}-Horizontalkneter HKD 2,5 mit DUPLEX-Schaufeln überführt und während des Knetens über einen Zeitraum von ca. 5 Minuten 30 g einer bei Raumtemperatur gesättigten Kalium-Tetraborat Pentahydrat-Lösung, als Verbindung, welche in Kombination mit einem Verdickungsmittel gemeinsam die Festigkeit erhöht, zugesetzt. Dann wurde noch 30 Minuten weiter geknetet und homogenisiert. Es entstand eine Pigmentzubereitung von pastöser Konsistenz.

Die hergestellte pastöse Pigmentzubereitung zeigte keine Färbewirkung auf trockene und glatte Oberflächen gemäß dem beschriebenen Prüfverfahren, da die durchschnittliche Massenzunahme des Bolzens 0,00 g betrug. Außerdem zeigte sie über einen Zeitraum von mehreren Monaten keine Entmischung der Phasen. Bei der Bestimmung der Dispergierbarkeit in Wasser gemäß dem beschriebenen Verfahren löste sie sich innerhalb von 60 s vollständig auf.

Abtestung in Dispersionfarbe: 10 g der hergestellten pastösen Pigmentzubereitung wurden für die beschriebene Bestimmung der Dispergierbarkeit in Dispersionsfarben eingesetzt. Das Ergebnis:

| | |
|---|---|
| 10 min bei 1000 U/min | Bewertungsstufe: 1 |
| 20 min bei 2000 U/min | Bewertungsstufe: 1 |
| 10 min bei 4500 U/min | Bewertungsstufe: 1 |

Bereits nach 10min bei 1000 U/min war die Bewertungsstufe 1 erreicht. Die pastöse Pigmentzubereitung zeigte also bereits bei der geringsten Dispergierenergie eine sehr gute Dispergierbarkeit.

### XI. Beispiel 10

Die pastöse Pigmentzubereitung aus Beispiel 9 wurde für 60 Stunden bei -11 °C in einem luftdicht verschließbaren Behälter eingefroren. Dann wurde sie wieder auf Raumtemperatur aufgetaut. Die wieder aufgetaute pastöse Pigmentzubereitung zeigte keine Unterschiede zu der ursprünglichen Pigmentzubereitung. Es hatte sich kein Wasser ausgeschieden- Bei der Bestimmung der Dispergierbarkeit in Wasser gemäß dem beschriebenen Verfahren, löste sie sich noch immer innerhalb von 60 s vollständig auf.

Abtestung in Dispersionfarbe: 10g der wieder aufgetauten pastösen Pigmentzubereitung wurden für die beschriebene Bestimmung der Dispergierbarkeit in Dispersionsfarben eingesetzt. Das Ergebnis:

| | |
|---|---|
| 10 min bei 1000 U/min | Bewertungsstufe: 1 |
| 20 min bei 2000 U/min | Bewertungsstufe: 1 |
| 10 min bei 4500 U/min | Bewertungsstufe: 1 |

Bereits nach 10 min bei 1000 U/min wurde die Bewertungsstufe 1 erreicht. Die pastöse Pigmentzubereitung zeigte also bereits bei der geringsten Dispergierenergie eine hervorragende Dispergierbarkeit. Die Dispergierbarkeit in Dispersionsfarbe hatte sich durch das Einfrieren und Auftauen nicht verschlechtert.

### XII. Beispiel 11 (Vergleichsbeispiel zu den Beispielen 9 und 10)

Abtestung in Dispersionfarbe: Zum Vergleich wurden 6 g des für die Herstellung der pastösen Pigmentzubereitung aus Beispiel 10 eingesetzten Bayferrox® 130M-Pulvers für die beschriebene Bestimmung der Dispergierbarkeit in Dispersionsfarben eingesetzt. Das Ergebnis:

| | |
|---|---|
| 10 min bei 1000 U/min | Bewertungsstufe: 5 |
| 20 min bei 2000 U/min | Bewertungsstufe: 5 |
| 10 min bei 4500 U/min | Bewertungsstufe: 4 |

Das eingesetzte Bayferrox^{®} 130M-Pulver war nur unzureichend dispergierbar, da die Bewertungsstufen 1 oder 2 nicht erreicht werden konnten. Das eingesetzte Bayferrox® 130M-Pulver war also deutlich schlechter dispergierbar wie die daraus hergestellten pastösen Pigmentzubereitungen aus den Beispielen 9 und 10.

### XIII. Beispiel 12

Ein Eisenoxidgelb-Pigment, hergestellt nach dem Fällverfahren, wurde nach der Synthese filtriert und salzfrei gewaschen. Der erhaltene Filterkuchen wies einen Feststoffgehalt von 51,4% auf. In einer Mischung aus 242 g Wasser, 155 g einer 15%igen Mowiol^{®} 18-88-Lösung und 58 g einer 8%igen Mowiol^{®} 40-88-Lösung wurden zunächst 1,39 g Walocel CRT 40000GA (Natriumcarboxymethylcellulose, Handelsprodukt der Wolff Cellulosics GmbH & Co. KG) als zusätzliches Verdickungsmittel gelöst. In dieser Lösung wurden 973 g des Filterkuchens dispergiert, so dass eine Dispersion mit 35% Pigmentgehalt erhalten wurde. Die Pigmentsuspension wurde in einen IKA^{®}-Horizontalkneter HKD 2,5 mit DUPLEX-Schaufeln überführt und während des Knetens über einen Zeitraum von ca. 5 Minuten 40 g einer bei Raumtemperatur gesättigten Kalium-Tetraborat Pentahydrat-Lösung mit ca. 40% Wirkstoffgehalt, als Verbindung, welche in Kombination mit einem Verdickungsmittel gemeinsam die Festigkeit erhöht, zugesetzt. Dann wurde noch 30 Minuten weiter geknetet und homogenisiert. Es entstand eine Pigmentzubereitung von pastöser Konsistenz.

Die hergestellte pastöse Pigmentsuspension zeigte keine Färbewirkung auf trockene und glatte Oberflächen gemäß dem beschriebenen Prüfverfahren, da die durchschnittliche Massenzunahme des Bolzens 0,00 g betrug. Außerdem zeigte sie über einen Zeitraum von mehreren Monaten keine Entmischung der Phasen. Bei der Bestimmung der Dispergierbarkeit in Wasser gemäß dem beschriebenen Verfahren löste sie sich innerhalb von 100 s vollständig auf.

Abtestung im Baustoffen: 34,3 g der pastösen Pigmentzubereitung wurden unter Rühren in 152 g Wasser gelöst und die erhaltene Suspension für den beschriebenen Baustoff-Farbtest eingesetzt. Es resultierten homogen gelb eingefärbte Steine.

Abtestung in Dispersionfarbe: 17,1 g der hergestellten pastösen Pigmentzubereitung wurden für die beschriebene Bestimmung der Dispergierbarkeit in Dispersionsfarben eingesetzt. Das Ergebnis:

| | |
|---|---|
| 10 min bei 1000 U/min | Bewertungsstufe: 1 |
| 20 min bei 2000 U/min | Bewertungsstufe: 1 |
| 10 min bei 4500 U/min | Bewertungsstufe: 1 |

Bereits nach 10 min bei 1000 U/min wurde die Bewertungsstufe 1 erreicht. Die pastöse Pigmentzubereitung zeigte also bereits bei der geringsten Dispergierenergie eine sehr gute Dispergierbarkeit.

### XIV. Beispiel 13 (Vergleichsbeispiel zu Beispiel 12)

Abtestung im Baustoffen: Zum Vergleich wurden 23,3 g des für die Herstellung der pastösen Pigmentzubereitung aus Beispiel 12 eingesetzten Filterkuchens in 163,7 g Wasser unter Rühren gelöst und die erhaltene Suspension für den beschriebenen Baustoff-Farbtest eingesetzt. Es wurden ebenfalls homogen gelb eingefärbte Steine, erhalten. Diese waren allerdings im Vergleich zu denen aus Beispiel 12 aufgrund des deutlich geringeren Gelbstiches wesentlich weniger brillant.

Abtestung in Dispersionfarbe: Zum Vergleich wurden 11,7 g des für die Herstellung der pastösen Pigmentzubereitung aus Beispiel 12 eingesetzten Filterkuchens für die beschriebene Bestimmung der Dispergierbarkeit in Dispersionsfarben eingesetzt. Das Ergebnis:

| | |
|---|---|
| 10 min bei 1000 U/min | Bewertungsstufe: 5 |
| 20 min bei 2000 U/min | Bewertungsstufe: 5 |
| 10 min bei 4500 U/min | Bewertungsstufe: 4 |

Der eingesetzte Filterkuchen war nur unzureichend dispergierbar, da die Bewertungsstufen 1 oder 2 nicht erreicht werden konnten. Unter allen Dispergierbedingungen war die aufgewendete Dispergierenergie unzureichend. Der eingesetzte Filterkuchen war also deutlich schlechter dispergierbar wie die daraus hergestellte pastöse Pigmentzubereitung aus Beispiel 12.

### XV. Beispiel 14

Ein Eisenoxidschwarz-Pigrnent, hergestellt nach dem Fällverfahren, wurde nach der Synthese filtriert, salzfrei gewaschen und über einen Scheibensprühtrockner getrocknet. Dann wurden in einer Mischung von 22,3 kg Wasser und 8,55 kg einer 8%igen Mowiol^{®} 40-88-Lösung 39,5 g Walocel CRT 40000GA, jeweils als Verdickungsmittel, gelöst. In diese Lösung wurden 33,75 kg des trockenen Schwarzpigment-Pulvers eingerührt und über eine Perlmühle mit 1 mm Mahlkugeln aus Zirkonoxid dispergiert, so dass eine Dispersion mit 52% Pigmentgehalt erhalten wurde. 1,44 kg dieser Dispersion wurden in einen IKA^{®}-Horizontalkneter HKD 2,5 mit DUPLEX-Schaufeln überführt und während des Knetens über einen Zeitraum von ca. 5 Minuten 30 g einer bei Raumtemperatur gesättigten Kalium-Tetraborat Pentahydrat-Lösung, als Verbindung, welche in Kombination mit einem Verdickungsmittel gemeinsam die Festigkeit erhöht, zugesetzt. Dann wurde noch 30 Minuten weiter geknetet und homogenisiert. Es entstand eine Pigmentzubereitung von pastöser Konsistenz.

Die hergestellte pastöse Pigmentzubereitung zeigte keine Färbewirkung auf trockene und glatte Oberflächen gemäß dem beschriebenen Prüfverfahren, da die durchschnittliche Massenzunahme des Bolzens 0,00 g betrug. Außerdem zeigte sie über einen Zeitraum von mehreren Monaten keine Entmischung der Phasen. Bei der Bestimmung der Dispergierbarkeit in Wasser gemäß dem beschriebenen Verfahren löste sie sich innerhalb von 60 s vollständig auf.

Abtestung im Baustoffen: 23 g der pastösen Pigmentzubereitung wurden unter Rühren in 164 g Wasser gelöst und die erhaltene Suspension für den beschriebenen Baustoff-Farbtest eingesetzt. Es resultierten homogen schwarz eingefärbte Steine.

Abtestung in Dispersionfarbe: 11,5 g der hergestellten pastösen Pigmentzubereitung wurden für die beschriebene Bestimmung der Dispergierbarkeit in Dispersionsfarben eingesetzt. Das Ergebnis:

| | |
|---|---|
| 10 min bei 1000 U/min | Bewertungsstufe: 1 |
| 20 min bei 2000 U/min | Bewertungsstufe: 1 |
| 10 min bei 4500 U/min | Bewertungsstufe: 1 |

Bereits nach 10 min bei 1000 U/min war die Bewertungsstufe 1 erreicht. Die pastöse Pigmentzubereitung zeigte also bereits bei der geringsten Dispergierenergie eine sehr gute Dispergierbarkeit.

### XVI. Beispiel 15

Die pastöse Pigmentzubereitung aus Beispiel 14 wurde für 60 Stunden bei -11 °C in einem luftdicht verschließbaren Behälter eingefroren. Dann wurde sie wieder auf Raumtemperatur aufgetaut. Die wieder aufgetaute pastöse Pigmentzubereitung zeigte keine Unterschiede zu der ursprünglichen Pigmentzubereitung. Es hatte sich kein Wasser ausgeschieden. Bei der Bestimmung der Dispergierbarkeit in Wasser gemäß dem beschriebenen Verfahren, löste sie sich noch immer innerhalb von 60 s vollständig auf.

Abtestung im Baustoffen: 23 g der wieder aufgetauten pastösen Pigmentzubereitung wurden unter Rühren in 164 g Wasser gelöst und die erhaltene Suspension für den beschriebenen Baustoff-Farbtest verwendet. Es resultierten wieder homogen schwarz eingefärbte Steine. Ein Unterschied zu den Steinen aus Beispiel 14 konnte nicht festgestellt werden.

Abtestung in Dispersionfarbe: 11,5 g der wieder aufgetauten pastösen Pigmentzubereitung wurden für die beschriebene Bestimmung der Dispergierbarkeit in Dispersionsfarben eingesetzt. Das Ergebnis:

| | |
|---|---|
| 10 min bei 1000 U/min | Bewertungsstufe: 1 bis 2 |
| 20 min bei 2000 U/min | Bewertungsstufe: 1 |
| 10 min bei 4500 U/min | Bewertungsstufe: 1 |

Bereits nach 10 min bei 1000 U/min wurde die Bewertungsstufe 1 bis 2 erreicht. Die pastöse Pigmentzubereitung zeigte also bereits bei der geringsten Dispergierenergie eine sehr gute Dispergierbarkeit.

Die hergestellte pastöse Pigmentzubereitung hatte sich also durch das Einfrieren und Auftauen nicht verschlechtert.

### XVII. Beispiel 16 (Vergleichsbeispiel zu den Beispielen 14 und 15)

Abtestung im Baustoffen: Zum Vergleich wurden 12 g des für die Herstellung der pastösen Pigmentzubereitung aus Beispiel 14 eingesetzten trockenen Schwarzpigment-Pulvers unter Rühren in 175 g Wasser dispergiert und die erhaltene Suspension für den beschriebenen Baustoff-Farbtest eingesetzt. Es wurden ebenfalls homogen schwarz eingefärbte Steine erhalten. Ein Unterschied zu den Steinen, die mit den gelförmigen Pigmentzubereitungen aus den Beispielen 14 und 15 eingefärbt worden waren, konnte nicht festgestellt werden.

Abtestung in Dispersionfarbe: Zum Vergleich wurden 6 g des für die Herstellung der pastösen Pigmentzubereitung aus Beispiel 14 eingesetzten trockenen Schwarzpigmentpulvers für die beschriebene Bestimmung der Dispergierbarkeit in Dispersionsfarben eingesetzt. Das Ergebnis:

| | |
|---|---|
| 10 min bei 1000 U/min | Bewertungsstufe: 5 |
| 20 min bei 2000 U/min | Bewertungsstufe: 4 bis 5 |
| 10 min bei 4500 U/min | Bewertungsstufe: 2 |

Bei dem eingesetzten getrockneten Schwarzpigment-Pulver mussten sehr intensive Dispergierbedingungen gewählt werden, um eine gute Dispergierung (Bewertungsstufe 2) zu erreichen. Das eingesetzte getrocknete Schwarzpigment-Pulver war also deutlich schlechter dispergierbar wie die pastöse Pigmentzubereitung aus den Beispielen 14 und 15.

### XVIH. Beispiel 17

In 656 g Wasser wurden unter schwachem erwärmen 33 g Mowiol^{®} 8-88 als Verdickungsmittel gelöst. Dann wurde unter Dispergierung 800 g Tronox^{®} A-Z (Titandioxid-Pigment, Handelsprodukt der Tronox Inc.) zugesetzt. Die Dispersion wurde in einen IKA^{®}-Horizontalkneter HKD 2,5 mit DUPLEX-Schaufeln überführt und portionsweise 25 g festes Natrium-Tetraborat Pentahydrat, als Verbindung, welche in Kombination mit einem Verdickungsmittel gemeinsam die Festigkeit erhöht, zugesetzt. Dann wurde noch 10 Minuten weiter geknetet und homogenisiert. Es entstand eine Pigmentzubereitung von pastöser Konsistenz.

Die hergestellte pastöse Pigmentzubereitung zeigte keine Färbewirkung auf trockene und glatte Oberflächen gemäß dem beschriebenen Prüfverfahren, da die durchschnittliche Massenzunahme des Bolzens 0,012 g betrug. Außerdem zeigte sie über einen Zeitraum von mehreren Monaten keine Entmischung der Phasen.

### XIX. Beispiel 18

In 675 g Wasser wurden unter Erwärmen auf über 80°C 6,8 g Carubin als Verdickungsmittel gelöst. Die Carubin-Lösung wurde in einen IKA^{®}-Horizontalkneter HKD 2,5 mit DUPLEX-Schaufeln überführt und 1 ml Preventol^{®} D6 als Konservierungsmittel zugesetzt. Dann wurden portionsweise 6,8 g Kelzan^{®} (Xanthan, Handelsprodukt der Firma CP Kelco Germany GmbH) als weiteres Verdickungsmittel zugesetzt, bis eine homogene Masse entstand. Nach und nach wurden portionsweise 825 g Bayferrox^{®} 130 (Eisenoxidrot-Pigment, Handelsprodukt der Lanxess Deutschland GmbH) zu dieser Masse zugesetzt und untergeknetet. Dann wurde noch 30 Minuten weiter geknetet und homogenisiert. Es entstand eine Pigmentzubereitung von pastöser gummiartiger Konsistenz. Bedingt durch die Herstellung bei höheren Temperaturen, war ein Teil des Wassers verdampft und die hergestellte pastöse gummiartige Pigmentzubereitung wies einen Pigmentgehalt von 57,5 Gew.-% auf.

Die hergestellte pastöse gummiartige Pigmentzubereitung zeigte keine Färbewirkung auf trockene und glatte Oberflächen gemäß dem beschriebenen Prüfverfahren, da die durchschnittliche Massenzunahme des Bolzens 0,08 g betrug. Außerdem zeigte sie über einen Zeitraum von mehreren Monaten keine Entmischung der Phasen.

Abtestung im Baustoffen: 20,8 g der pastösen gummiartigen Pigmentzubereitung wurden mit 10 Gew.% Natriumperjodat versetzt und 24 Stunden stehen gelassen. Dabei verflüssigte sich die pastöse gummiartige Pigmentzubereitung wieder. Die verflüssigte pastöse Pigmentzubereitung wurde unter Rühren in 166,2 g Wasser suspendiert und die erhaltene Suspension für den beschriebenen Baustoff-Farbtest verwendet. Es resultierten homogen rot eingefärbte Steine.

### XX. Beispiel 19

Zur weiteren Homogenisierung wurde die pastöse gummiartige Pigmentzubereitung aus Beispiel 18 in einem verschlossenen Behälter kurzzeitig auf 85 bis 90°C erwärmt. Die pastöse Pigmentzubereitung verflüssigte sich, beim Abkühlen bildete sich wieder eine Pigmentzubereitung von pastöser gummiartiger Konsistenz. Bedingt durch die Homogenisierung bei höheren Temperaturen, war ein weiterer Teil des Wassers verdampft und die erhaltene pastöse gummiartige Pigmentzubereitung wies einen Pigmentgehalt von 58,6 Gew.-% auf.

Die hergestellte pastöse gummiartige Pigmentzubereitung zeigte keine Färbewirkung auf trockene und glatte Oberflächen gemäß dem beschriebenen Prüfverfahren, da die durchschnittliche Massenzunahme des Bolzens 0,02 g betrug. Außerdem zeigte sie über einen Zeitraum von mehreren Monaten keine Entmischung der Phasen.

Abtestung im Baustoffen: 20,4 g der pastösen gummiartigen Pigmentzubereitung wurden mit 10 Gew.% Natriumperjodat versetzt und 24 Stunden stehen gelassen. Dabei verflüssigte sich die pastöse gummiartige Pigmentzubereitung wieder. Die verflüssigte pastöse Pigmentzubereitung wurde unter Rühren in 166,6 g Wasser suspendiert und die erhaltene Suspension für den beschriebenen Baustoff-Farbtest verwendet. Es resultierten homogen rot eingefärbte Steine. Ein Unterschied zu den Steinen aus Beispiel 18 konnte nicht festgestellt werden.

### XXI. Beispiel 20

In 750 g Wasser wurden unter Erwärmen auf über 80°C 3,75 g Carubin als Verdickungsmittel gelöst. Die Carubin-Lösung wurde in einen IKA^{®}-Horizontalkneter HKD 2,5 mit DUPLEX-Schaufeln überführt und 1 ml Preventol^{®} D6 als Konservierungsmittel zugesetzt. Dann wurden portionsweise 7,5 g Kelzan^{®} als weiteres Verdickungsmittel zugesetzt, bis eine homogene Masse entstand. Nach und nach wurden portionsweise 750 g Bayferrox^{®} 130 (Eisenoxidrot-Pigment, Handelsprodukt der Lanxess Deutschland GmbH) zu dieser Masse zugesetzt und untergeknetet. Schließlich wurden noch 45 g Aerosil^{®} 200 (hydrophile pyrogene Kieselsäure, Handelsprodukt der Degussa GmbH) als Füllstoff zugesetzt. Dann wurde noch 30 Minuten weiter geknetet und homogenisiert. Es entstand eine Pigmentzubereitung von pastöser gummiartiger Konsistenz. Bedingt durch die Herstellung bei höheren Temperaturen, war ein Teil des Wassers verdampft und die hergestellte pastöse gummiartige Pigmentzubereitung wies einen Pigmentgehalt von 54,5 Gew.-% auf.

Die hergestellte pastöse gummiartige Pigmentzubereitung zeigte keine Färbewirkung auf trockene und glatte Oberflächen gemäß dem beschriebenen Prüfverfahren, da die durchschnittliche Massenzunahme des Bolzens 0,12 g betrug. Außerdem zeigte sie über einen Zeitraum von mehreren Monaten keine Entmischung der Phasen.

Abtestung im Baustoffen: 22 g der pastösen gummiartigen Pigmentzubereitung wurden mit 10 Gew.% Natriumperjodat versetzt und 24 Stunden stehen gelassen. Dabei verflüssigte sich die pastöse gummiartige Pigmentzubereitung wieder. Die verflüssigte pastöse Pigmentzubereitung wurde unter Rühren in 165,7 g Wasser suspendiert und die erhaltene Suspension für den beschriebenen Baustoff-Farbtest verwendet. Es resultierten homogen rot eingefärbte Steine.

### XXII. Beispiel 21 (Vergleichsbeispiel zu den Beispielen 18, 19 und 20)

Abtestung im Baustoffen: Zum Vergleich wurden auch 12 g des für die Herstellung der gelförmigen Pigmentzubereitungen aus den Beispielen 18, 19 und 20 eingesetzten Bayferrox^{®} 130-Pulvers unter Rühren in 175 g Wasser dispergiert und für den beschriebenen Baustoff-Farbtest eingesetzt. Es wurden ebenfalls homogen rot eingefärbte Steine erhalten. Ein Unterschied zu den Steinen, die mit den gelförmigen Pigmentzubereitungen aus den Beispielen 18, 19 und 20 eingefärbt worden waren, konnte nicht festgestellt werden.

### XXIII. Beispiel 22

Zur weiteren Homogenisierung wurde die pastöse gummiartige Pigmentzubereitung aus Beispiel 20 in einem verschlossenen Behälter kurzzeitig auf 85 bis 90°C erwärmt. Nach dem Abkühlen bildete sich innerhalb einiger Tage wieder eine Pigmentzubereitung von pastöser gummiartiger Konsistenz.

Die hergestellte pastöse gummiartige Pigmentzubereitung zeigte keine Färbewirkung auf trockene und glatte Oberflächen gemäß dem beschriebenen Prüfverfahren, da die durchschnittliche Massenzunahme des Bolzens 0,01 g betrug. Außerdem zeigte sie über einen Zeitraum von mehreren Monaten keine Entmischung der Phasen.

### III. Die Figuren

Der Bolzen zur Prüfung der Färbewirkung auf trockene und glatte Oberflächen sowie die Formstabilität der Pigmentzubereitung wird anhand von mehreren Figuren näher erläutert. Hierbei gehen aus den Figuren weitere erfindungswesentliche Merkmale und Vorteile der Erfindung hervor. Es zeigen:
- Figur 1: Bolzen aus blankgezogenem V4A-Rundstahl (Werkstoff 1.4571) mit einem Durchmesser von 8 mm und einer Länge von 200 mm. Ein Ende des Bolzens ist auf einer Länge von 10 mm zu einer Spitze gearbeitet. Der Bolzen dient zur Prüfung der Färbewirkung auf trockene und glatte Oberflächen.
- Figur 2:: Gelförmige Pigmentzubereitung aus Beispiel 1. Anhand der Fotos soll die Formstabilität demonstriert werden. Zum Größenvergleich dient eine Ein-Euro-Münze.
- Figur 3:: Gelförmige Pigmentzubereitung aus Beispiel 3. Anhand der Fotos soll die Formstabilität demonstriert werden. Zum Größenvergleich dient eine Ein-Euro-Münze.

## Patentansprüche

1. Pigmentzubereitung zum Einfärben von kalk- und/oder zementgebundenen Baustoffen, Asphalt, Farben, Lacken, Papier oder Kunststoffen, enthaltend
- eines oder mehrere in einer Flüssigkeit dispergierte anorganische und/oder organische Pigmente; und
- gegebenenfalls noch weitere Hilfsmittel und/oder Füllstoffe;
wobei die Pigmentzubereitung
- von pastöser oder gelförmiger Konsistenz ist; und
- nicht zur Entmischung der Phasen neigt.

2. Pigmentzubereitung gemäß Anspruch 1, **dadurch gekennzeichnet, dass** als Flüssigkeit Wasser oder eine mit Wasser mischbare Flüssigkeit oder ein Gemisch aus mindestens zwei mit Wasser mischbaren Flüssigkeiten eingesetzt wird.

3. Pigmentzubereitung gemäß Anspruch 1, **dadurch gekennzeichnet, dass** als Flüssigkeit eine mit Wasser nicht-mischbare Flüssigkeit oder ein Gemisch aus mindestens zwei mit Wasser nicht-mischbaren Flüssigkeiten eingesetzt wird.

4. Pigmentzubereitung gemäß einem oder mehreren der Ansprüche 1 bis 3, **dadurch gekennzeichnet, dass** als anorganische Pigmente Eisenoxid-, Titandioxid-, Chromoxid-, Zinkoxid-, Rutilmischphasenpigmente und Ruß (Kohlenstoffpigmente) oder Mischungen davon eingesetzt werden.

5. Pigmentzubereitung gemäß einem oder mehreren der Ansprüche 1 bis 4, **dadurch gekennzeichnet, dass** als organische Pigmente Azo-, Chinacridon-, Phthalocyanin- und Perylen-Pigmente und Indigoide oder Mischungen davon eingesetzt werden.

6. Pigmentzubereitung gemäß einem oder mehreren der Ansprüche 1 bis 5, **dadurch gekennzeichnet, dass** die Pigmentzubereitung einen Pigmentgehalt von mindestens 15 Gew.%, insbesondere mindestens 25 Gew.-%, aufweist.

7. Pigmentzubereitung gemäß einem oder mehreren der Ansprüche 1 bis 6, **dadurch gekennzeichnet, dass** die pastöse oder gelförmige Konsistenz der Pigmentzubereitung durch Zusatz mindestens eines Verdickungsmittels und/oder mindestens eines Verdickungsmittels in Kombination mit einer oder mehrerer Verbindungen, welche gemeinsam die Festigkeit erhöhen, bewirkt wird.

8. Pigmentzubereitung gemäß Anspruch 7, **dadurch gekennzeichnet, dass** als Verdickungsmittel organische Verdickungsmittel wie organische natürliche Verdickungsmittel, organische abgewandelte Naturstoffe, organische vollsynthetische Verdickungsmittel, organische assoziative Verdickungsmittel oder niedermolekulare organische Produkte eingesetzt werden.

9. Pigmentzubereitung gemäß Anspruch 7, **dadurch gekennzeichnet, dass** als Verdickungsmittel anorganische Verdickungsmittel eingesetzt werden.

10. Pigmentzubereitung gemäß einem oder mehreren der Ansprüche 7 bis 9, **dadurch gekennzeichnet, dass** mindestens ein Verdickungsmittel in Kombination mit einer oder mehrerer Verbindungen, welche gemeinsam die Festigkeit erhöhen, in einer Gesamtmenge von 0,001 bis 10 Gew.-%, insbesondere von 0,1 bis 5 Gew.-%, bezogen auf die Pigmentzubereitung eingesetzt werden.

11. Pigmentzubereitung gemäß Anspruch 7, **dadurch gekennzeichnet, dass**
- als Verdickungsmittel Algenextrakte wie Agar-Agar, Carrageene in der Iota-, Kappa- oder Lambda-Form, Alginate wie Natriumalginat oder Calciumalginat, Exsudate von Mirkoorganismen oder Pflanzen wie Xanthan und seine Derivate, Gellan, Gummi arabicum, Tragant, Karaya-Gummi oder Ghatti-Gummi, Endosperme der Samen von Früchten oder Pflanzen wie Guar-Mehl, Carubin oder Tarakern-Mehl, Fruchtextrakte wie Pektine, Verdickungsmittel tierischen Ursprungs wie Proteinderivate und Gelatine von Rindern, Schweinen, Fischen sowie Caseinate, oder Gemische dieser Verbindungen eingesetzt werden; und
- als Verbindung beziehungsweise Verbindungen, welche in Kombination mit mindestens einem Verdickungsmittel gemeinsam die Festigkeit erhöhen, unter den Carbonaten, Hydrogencarbonaten, Sulfaten, Glycerinphosphaten, Boraten, Chloriden, Nitraten, Phosphaten, Acetaten, Hydroxiden der einwertigen, zweiwertigen oder dreiwertigen Metallsalze und insbesondere unter Salzen der Alkali- und Erdalkalimetalle, vor allem Natrium-, Kalium-, Magnesium-, Calcium- oder Strontiumsalze wie Natriumnitrat, Kaliumnitrat, Magnesiumnitrat, Calciumnitrat, Strontiumnitrat, Natriumboraten, Kaliumboraten, Calciumboraten, Magnesiumboraten, Natriumchlorid, Kaliumchlorid, Magnesiumchlorid, Calciumchlorid, Strontiumchlorid, Natriumsulfat, Kaliumsulfat, Magnesiumsulfat, Calciumsulfat, Calciumphosphat, Magnesiumacetat, Calciumacetat oder aus Gemischen dieser Salze eingesetzt wird beziehungsweise werden, wobei die Menge der Verbindung beziehungsweise der Verbindungen im Bereich von 0,001 bis 3 Gew.-% und insbesondere im Bereich von 0,1 bis 1,5 Gew.-% bezogen auf das Gesamtgewicht der Pigmentzubereitung liegt beziehungsweise liegen.

12. Pigmentzubereitung gemäß Anspruch 7, **dadurch gekennzeichnet, dass** als Verdickungsmittel teil- oder vollhydrolysierte Polyvinylalkohole sowie deren Derivate oder andere Polyhydroxyverbindungen in Kombination mit Borverbindungen, insbesondere *ortho*-Borsäure, *tetra*-Borsäure, *meta*-Borsäure oder deren Salze, oder in Kombination mit Salzen oder Komplexen von Elementen der IV. bis VI. Nebengruppe des Periodensystems, insbesondere von Titan, Vanadium und Chrom, wie Titan-(III)-Salze oder Titan-(IV)-Triethanolamin, gegebenenfalls unter neutraler oder schwach alkalischer Einstellung des pH-Wertes, eingesetzt werden.

13. Pigmentzubereitung gemäß einem oder mehreren der Ansprüche 1 bis 12, **dadurch gekennzeichnet, dass** als Hilfsmittel Netzmittel und/oder Dispergieradditive und/oder Emulgatoren und/oder Konservierungsstoffe und/oder Entschäumer und/oder Retentionsmittel und/oder Absetzverhinderer und/oder Duftstoffe eingesetzt werden.

14. Pigmentzubereitung gemäß Anspruch 13, **dadurch gekennzeichnet, dass** die Hilfsmittel in einer Gesamtmenge von 0,001 bis 10 Gew.%, insbesondere von 0,05 bis 5 Gew.-%, bezogen auf die Pigmentzubereitung eingesetzt werden.

15. Pigmentzubereitung gemäß einem oder mehreren der Ansprüche 1 bis 14, **dadurch gekennzeichnet, dass** die Pigmentzubereitung über einen Zeitraum von mindestens zwei Monaten, insbesondere von mindestens sechs Monaten, nicht zur Entmischung der Phasen neigt.

16. Pigmentzubereitung gemäß einem oder mehreren der Ansprüche 1 bis 15, **dadurch gekennzeichnet, dass** die Pigmentzubereitung nur eine geringe - insbesondere gar keine - Färbewirkung auf trockene und glatte Oberflächen, wie beispielsweise Metall, Glas, Keramik, Textilien oder Kunststoffe, aufweist.

17. Pigmentzubereitung gemäß Anspruch 16, **dadurch gekennzeichnet, dass** die Färbewirkung auf trockene und glatte Oberflächen durchschnittlich maximal 0,15 g, insbesondere maximal 0,07g, gemäß dem in der Beschreibung offenbarten Prüfverfahren der Färbewirkung auf trockene und glatte Oberflächen, beträgt.

18. Pigmentzubereitung gemäß einem oder mehreren der Ansprüche 1 bis 17, **dadurch gekennzeichnet, dass** die Pigmentzubereitung zusätzlich noch mindestens einen Füllstoff in einer Menge von maximal 40 Gew.-%, insbesondere von maximal 10 Gew.-%, bezogen auf die Pigmentzubereitung, enthält.

19. Verfahren zur Herstellung einer Pigmentzubereitung gemäß einem oder mehreren der Ansprüche 1 bis 18, **dadurch gekennzeichnet, dass**
- zu einer Dispersion von einem oder mehreren anorganischen und/oder organischen Pigmenten in einer Flüssigkeit, welche gegebenenfalls noch weitere Hilfsmittel und/oder Füllstoffe enthält und
- vor, während oder nach der Dispergierung mindestens ein Verdickungsmittel und/oder mindestens ein Verdickungsmittels in Kombination mit einer oder mehrerer Verbindungen, welche gemeinsam die Festigkeit erhöhen, zugesetzt wird und
- die pastöse oder gelförmige Pigmentzubereitung ausreichend lange homogenisiert wird und
- gegebenenfalls abschließend noch weitere Hilfsmittel zugesetzt werden.

20. Verfahren zur Herstellung gemäß Anspruch 19, **dadurch gekennzeichnet, dass** der Zusatz mindestens eines Verdickungsmittels und/oder mindestens eines Verdickungsmittels in Kombination mit einer oder mehrerer Verbindungen welche gemeinsam die Festigkeit erhöhen, bei Raumtemperatur oder oberhalb von Raumtemperatur erfolgt.

21. Verfahren zur Herstellung gemäß einem oder mehreren der Ansprüche 19 bis 20, **dadurch gekennzeichnet, dass** organische oder anorganische Verdickungsmittel zugesetzt werden.

22. Verfahren zur Herstellung gemäß Anspruch 21, **dadurch gekennzeichnet, dass** als organische Verdickungsmittel teil- oder vollhydrolysierte Polyvinylalkohole sowie deren Derivate oder anderer Polyhydroxyverbindungen in Kombination mit Borverbindungen wie *ortho*-Borsäure, *tetra*-Borsäure, *meta*-Borsäure oder deren Salze, oder in Kombination mit Salzen oder Komplexen von Elementen der IV. bis VI. Nebengruppe des Periodensystems, insbesondere von Titan, Vanadium und Chrom, wie Titan-(III)-Salze oder Titan-(IV)-Triethanolamin, gegebenenfalls unter neutraler oder schwach alkalischer Einstellung des pH-Wertes eingesetzt werden.

23. Verfahren zur Herstellung gemäß einem oder mehreren der Ansprüche 19 bis 22, **dadurch gekennzeichnet, dass** die Dispersion von einem oder mehreren anorganischen und/oder organischen Pigmenten in einer Flüssigkeit eine Dispersion aus dem Pigmeniherstellungsprozess ist.

24. Verfahren zur Herstellung gemäß einem oder mehreren der Ansprüche 19 bis 22, **dadurch gekennzeichnet, dass** die Dispersion von einem oder mehreren anorganischen und/oder organischen Pigmenten in einer Flüssigkeit eine erneute Dispersion von zuvor agglomerierten Partikeln ist.

25. Verfahren zur Herstellung gemäß einem oder mehreren der Ansprüche 19 bis 24, **dadurch gekennzeichnet, dass** vor, während oder nach der Dispergierung von einem oder mehreren anorganischen und/oder organischen Pigmenten in einer Flüssigkeit, die - gegebenenfalls portionsweise - Zugabe mindestens eines organischen oder anorganischen Verdickungsmittels und/oder mindestens eines Verdickungsmittels in Kombination mit einer oder mehrerer Verbindungen, welche gemeinsam die Festigkeit erhöhen, in einem Rührwerk, einem Mischer, einem Kneter oder einem Dissolver erfolgt.

26. Verfahren zur Herstellung gemäß einem oder mehreren der Ansprüche 19 bis 25, **dadurch gekennzeichnet, dass** das Homogenisieren der pastösen oder gelförmigen Pigmentzubereitung in einem Rührwerk, einem Mischer, einem Kneter oder einem Walzwerk, gegebenenfalls auch unter vermindertem Druck, erfolgt.

27. Verfahren zum Einfärben von kalk- und/oder zementgebundenen Baustoffen, Asphalt, Farben, Lacken, Papier oder Kunststoffen mit der Pigmentzubereitung gemäß einem oder mehreren der Ansprüche 1 bis 18 beziehungsweise hergestellt gemäß einem oder mehreren der Ansprüche 19 bis 26, **dadurch gekennzeichnet, dass** die Pigmentzubereitung mit den kalk- und/oder zementgebundenen Baustoffen, Asphalt, Farben, Lacken, Papier oder Kunststoffen vermischt wird.

28. Verfahren zum Einfärben gemäß Anspruch 27, **dadurch gekennzeichnet, dass** die Pigmentzubereitung vor oder während der Zugabe zu den kalk- und/oder zementgebundenen Baustoffen, Asphalt, Farben, Lacken, Papier oder Kunststoffen beziehungsweise während des Mischvorganges mit den kalk- und/oder zementgebundenen Baustoffen, Asphalt, Farben, Lacken, Papier oder Kunststoffen verflüssigt wird, wobei die Verflüssigung durch
- Lösen in einer oder mehreren Flüssigkeiten und/oder
- Zugabe einer Säure oder Lauge durch Änderung des pH-Wertes und/oder
- Chemische Reaktion, insbesondere von Redox-Reaktionen, oder enzymatische Reaktion und/oder
- Zufuhr von Wärme, mechanischer Energie und/oder Ultraschall.
erfolgt.

29. Verfahren zum Einfärben gemäß einem oder mehreren der Ansprüche 27 bis 28, **dadurch gekennzeichnet, dass** die Pigmentzubereitung mit den kalk- und/oder zementgebundenen Baustoffen, Asphalt, Farben, Lacken, Papier oder Kunststoffen in einer Menge von 0,01 bis 15 Gew.-%, insbesondere von 0,1 bis 10 Gew.-%, bezogen auf die gesamte Mischung, vermischt wird.
